# EUROPEAN PATENT SPECIFICATION

(11) **EP 3 283 606 B1**
(45) Date of publication and mention of the grant of the patent: **19.05.2021**
(21) Application number: 16774400.2
(22) Date of filing: 04.04.2016
(51) Int. Cl.: C11B 1/10, A61K 8/97, B01D 1/14, B01D 3/40, B01D 11/00, B01D 11/02

(54) **IMPROVED METHOD AND APPARATUS FOR EXTRACTING BOTANICAL OILS**
VERFAHREN UND VORRICHTUNG ZUR EXTRAKTION PFLANZLICHER ÖLE
PROCÉDÉ ET APPAREIL AMÉLIORÉS D'EXTRACTION D'HUILES BOTANIQUES

(30) Priority: 03.04.2015 US 201562142562 P
(43) Date of publication of application: 21.02.2018
(73) Proprietor: Natural Extraction Systems, LLC, Boulder, CO 80301 (US)
(72) Inventor: THOMAS, C., Russell, Boulder, CO 80301 (US)
(74) Representative: Ter Meer Steinmeister & Partner
(86) International application number: PCT/US2016/025867
(87) International publication number: WO 2016/161420

(56) References cited:
- EP-A1- 2 644 039
- US-A- 3 270 437
- US-A- 4 279 824
- US-A- 5 026 549
- US-A- 5 235 992
- US-A- 5 408 924
- US-A1- 2010 119 606
- US-A1- 2010 119 606
- US-A1- 2014 001 027
- US-A1- 2014 113 010
- US-B1- 6 403 126

## Description

### CROSS-REFERENCE TO RELATED APPLICATIONS

This Patent Cooperation Treaty patent application claims priority to U.S. provisional patent application Serial No. 62/142,562, filed April 3, 2015. The invention relates to extraction of an oil from plant material for which prior art document US2014/0113010A1 provides an example.

### SUMMARY OF THE INVENTION

The present invention relates to processes that are used to extract botanical oils, terpenoids, oleoresins and/or resins (generically referred to in this disclosure as "oils" or "plant oils") from plant material or an oil containing substrate (generically referred to in this disclosure as "plant material"). The method of extraction according to claim 1 includes contacting the plant material with a heated gas and/or heated surface of a specific temperature such that the oils contained within the plant material are caused to volatilize and leave the plant material in the form of a vapor. The vapor is then condensed and collected using a collection solvent in a manner that preserves and protects the integrity of the oil constituents. The collection solvent utilized in the system is preferably ethanol or a mixture of ethanol and water, however, water, chloroform or a number of other suitable organic or inorganic solvents may be utilized to attain the desired results. A method of separating the captured plant oils from the collection solvent is included whereby a substantially purified plant oil extract can be obtained as a final product of the system.

As non-limiting examples, a few of the many types of plant materials that may be processed using the present invention may include various forms of hemp or cannabis that may generally be classified as cannabis sativa, cannabis indica, cannabis ruderalis, hybridized crosses of various species or families of cannabis, or a mixture of one or more types of cannabis and/or other plant material. When cannabis is selected as the plant material to be processed, the preferred oils to be extracted may include the various chemical forms of cannabidiol (CBD), cannabidivarin (CBDV), delta-9-tetrahydrocannabinol (THC), delta-8-tetrahydrocannabinol, tetrahydrocannabivarin (THCV), cannabinol (CBN), cannabigerol, cannabichromene, chemically converted cannabinoids or any other cannabinoid. Other valuable terpenoid oils that may be extracted from cannabis may include the various chemical forms of linalool, caryophyllene, myrcene, limonene, humulene, pinene. By manipulating the temperature of the heated gas and/or heated surfaces that contact the plant materials and completing successive extraction cycles, it is possible to isolate the various plant oils into substantially purified fractions. It is also possible utilize a wider temperature band to extract a range of plant oils in a single extraction cycle. It should be noted that any plant material may be processed by the present invention and any plant oils may be targeted as the oils to be extracted.

An embodiment of the present disclosure provides a system for extracting an oil from plant material. A gas moving device is operable to propel a gas stream through the system, the gas stream being a stream of air or gas with or without entrained vapor, solids or droplets of liquid therein. An extraction chamber is in communication with the gas moving device such that the gas stream is directed through the extraction chamber, the extraction chamber operable to volatize at least a portion of an oil from a plant material such that the volatilized oil is disposed in the gas stream as an extracted oil. A collection chamber is in communication with the extraction chamber such that the gas stream flows through the collection chamber, the collection chamber having collection solvent operable to collect at least a portion of the extracted oil from the gas stream. A liquid collector in fluid communication with the collection chamber for collecting at least a portion of the collection solvent and extracted oil.

Some versions include a heater disposed such that the gas stream flows through the heater and the gas stream is heated. The heater may be operable to heat the gas stream to a temperature sufficient to cause volatilization of the oil to be extracted, with the extraction chamber being in communication with the heater such that the heated gas stream is directed through the receiving area, the extraction chamber operable to volatilize the portion of the oil by the heated gas stream volatilizing the portion of the oil as the heated gas stream flows through the extraction chamber. The extraction chamber may include a volatilization chamber having an upwardly facing entry tube and an exit disposed below the entry tube such that the gas flow impacts an upper end of the volatilization chamber and reverses direction before exiting the volatilization chamber. The extraction chamber may be a modified spray dryer having a nozzle, the heated gas stream with entrained plant material being introduced through the nozzle. In some examples, the heater is operable to heat the gas stream at an exit of the heater or in the extraction chamber to a temperature in the range of 143 degrees Celsius to 221 degrees Celsius (290 degrees Fahrenheit to 430 degrees Fahrenheit). In certain examples, the heater is operable to heat the gas stream to a temperature of at least 143 degrees Celsius(290 degrees Fahrenheit). The heater may be a tube-in-shell heat exchanger with a steam generator providing steam to the heat exchanger or is an electric heater.

In some versions, the extraction chamber includes a volatilization chamber having at least one heated surface and the portion of the oil is volatilized by the plant material contacting the heated surface. In certain examples, the at least one heated surface has a temperature is in the range of 143 to 221 degrees Celsius (290 to 430 degrees Fahrenheit). In some examples, the at least one heated surface has a temperature of at least 143 degrees Celsius (290 degrees Fahrenheit). The extraction chamber may have a tangential entrance.

In some versions, the extraction chamber includes a flash drying volatilization chamber having an entrance and an exit, the exit being above the entrance such that the gas stream flows upwardly and entrained plant materials are carried upwardly by the gas stream. The entrance may be a nozzle.

In some embodiments, the extraction chamber comprises a volatilization chamber having a tangential entrance.

In some versions, the extraction chamber includes elements to break up clumps of plant material. Examples of such elements include balls, beads and rotating elements.

In some embodiments, the extraction chamber includes an insulated and/or heated shell.

In certain versions, the extraction chamber may include a plurality of volatilization chambers in series and/or parallel.

Some versions of the extraction chamber may have a receiving area for receiving plant material for extraction.

Certain embodiments further include a plant material entrainment zone in communication with the gas stream mover such that the gas stream flows through the plant material entrainment. zone, the plant material entrainment zone forming at least a part of the extraction chamber. A hopper for holding plant material and a plant material portioning device operable to introduce the plant material into the plant material entrainment zone may also be included. Examples of the plant material portioning devices include an auger screw, a rotary valve, and a rotary airlock valve.

In some embodiments, the collection chamber has at least one collection solvent sprayer operable to spray droplets of collection solvent into the gas stream such that at least some of the extracted oil dissolves into the collection solvent droplets and at least some of the collection solvent droplets flow to the liquid collector. The at least one collection solvent sprayer may be a plurality of collection solvent sprayers and the collection solvent droplets may generally have a diameter greater than one micron and less than 300 microns. The collection chamber may have packing material disposed therein with the packing material wetted by the collection solvent.

In some embodiments, the system includes a secondary liquid separator in communication with the collection chamber.

In certain embodiments, the system includes a cooling chamber in communication with the extraction chamber such that the heated gas stream flows through the cooling chamber, and the cooling chamber is operable to cool the heated gas stream to or below a volatilization temperature of the extracted oil such that at least some of the extracted oil liquefies into droplets entrained in the gas stream. The collection chamber is downstream of the cooling chamber. The cooling chamber may be a spray cooling chamber having a high pressure sprayer operable to spray collection solvent into the heated gas stream such that the collection solvent rapidly cools the heated gas stream to or below a condensation temperature of the oil. The sprayed collection solvent may be collection solvent and extracted oil from the liquid collector, and the system may further include a pump operable to pump the collection solvent and extracted oil from the liquid collector to the high pressure sprayer. Alternatively, the sprayed collection solvent is a substantially purified collection solvent. A collection solvent cooler may be provided to cool the collection solvent for the high pressure sprayer.

In certain embodiments, interior surfaces of the extraction chamber and portions of the system downstream of the extraction chamber and upstream of the collection and/or cooling chamber are maintained at a temperature sufficient to prevent condensation of the volatilized oils on said interior surfaces. In some examples, the temperature sufficient to prevent condensation is in the range of 143 degrees Celsius to 221 degrees Celsius (290 degrees Fahrenheit to 430 degrees Fahrenheit).

Some embodiments include a gas stream cooler in communication with the extraction chamber. The gas stream cooler may be a tube-in-shell heat exchanger.

Some embodiments include an agglomeration chamber in communication with the cooling chamber or extraction chamber so as to receive the gas stream, the agglomeration chamber increasing the droplet size in the gas stream. The agglomeration chamber may have a diameter greater than a diameter of a passage upstream of the agglomeration chamber such that the gas stream slows down in the agglomeration chamber. The agglomeration chamber may include at least one collection solvent vapor injector operable to introduce a collection solvent vapor to the agglomeration chamber. Alternatively, or additionally, the agglomeration chamber may have a flow of cool gas that mixes with the heated gas stream. An oil/solvent separation system may be provided to generally separate the collection solvent from the extracted oil so as to provide a generally purified collection solvent and a generally purified oil, with the separation system providing collection solvent vapor to the at least one collection solvent vapor injector.

In some embodiments, passages or chambers disposed downstream of the extraction chamber have inner surfaces with a temperature less than a condensation temperature of the collection solvent such that collection solvent vapor entrained in the gas stream condenses on the inner surfaces and forms a solvent liquid that washes accumulated oils and collection solvent containing dissolved oils from the inner surfaces, the combined liquid flowing to the liquid collector. In certain examples, the temperature less than a condensation temperature is in the range of approximately 29 degrees Celsius to 63 degrees Celsius (85 degrees Fahrenheit to 145 degrees Fahrenheit). . In some examples, interior surfaces of the extraction chamber are heated to a temperature sufficient to prevent condensation of the volatilized oils on the interior surfaces.

Some embodiments include an oil/solvent separation system operable to generally separate the collection solvent from the extracted oil so as to provide a generally purified collection solvent and a generally purified oil. The separation system may include an evaporation device, and may also include a condenser to condense solvent vapor from the evaporation device.

Some embodiments include a plant material separation device in communication with and downstream of the extraction chamber, the plant material separation device operable to separate at least a portion of the plant material entrained in the gas stream therefrom. The plant material separation device may be a cyclone or centrifugal separator and/or the separator has a heated exit and/or the separator has a heated backflow to displace vapors. The plant material separation device may also include a secondary entrainment zone and a secondary gas stream mover operable to propel a secondary gas stream through the secondary entrainment zone, the plant material separation device providing the separated portion of plant material to the secondary entrainment zone. A secondary plant material separator may be in communication with the secondary entrainment zone. In some examples, the secondary gas stream has a temperature less than a temperature of the gas stream flowing through the plant material separation device. A gas stream filter may be in communication with the plant material separation device.

Some embodiments include a collection solvent separation device for separating at least a portion of the collection solvent from the gas stream.

Certain embodiments include a gas pump operable to remove gas from the system so as to maintain an interior pressure below atmospheric and prevent outward leakage from the system.

In some examples, the collection solvent is: a non-toxic, food-grade solvent; a mixture of ethyl alcohol and water; a mixture of organic ethyl alcohol and water; or a solvent containing at least 40% ethyl alcohol. In further examples, the collection solvent is ethanol, a mixture of ethanol and water, water, chloroform or organic or inorganic solvents.

In some embodiments, at least a portion of the collection solvent and extracted oil is recirculated to the collection chamber.

In certain embodiments, the plant materials are raw plant portions or partially processed plant portions and the extracted oil includes terpenoids.

In certain embodiments, the system is a substantially closed loop system.

In some versions, the liquid collector is a sump in fluid communication with at least the collection chamber.

In certain embodiments, the plant materials are raw plant portions or partially processed plant portions and the system is extracting one or more specific saps, resins, oleoresins, lipids, terpenoids or otherwise volatilizable constituents within a plant material that is being processed.

In some embodiments, the gas stream includes a gas selected from air, inert gas, reducing gas and mixtures thereof.

The gas stream mover may be a blower.

The present invention also includes use of any apparatus described herein to provide an extracted oil.

In some versions, the gas moving device is part of the collection chamber.

In some embodiments, the heater and/or the plant material separator and/or the gas stream filter 49 and/or the extraction chamber are insulated and/or heated.

The present invention includes a method for extracting an oil from plant material. The system as cited in claim 1 is used. A plant material is provided in the extraction chamber and oil is volatilized from the plant material, the oil being extracted into the gas stream. The gas stream is contacted with a collection solvent such that at least some of the oil is captured by the collection solvent. At least a portion of the oil and collection solvent is collected from the gas stream. In some versions, the plant material is exposed to the heated gas stream, the gas stream being heated to a temperature sufficient to cause volatilization of an oil to be extracted from the plant material.

In some versions of the method, the contacting and collecting steps comprise flowing at least a portion of the gas stream through a collection chamber and spraying the at least a portion of the gas stream with collection solvent such that at least some of the oil in the gas stream is captured by the collection solvent and at least some of the collection solvent flows to the collection chamber.

In some versions of the system or method the plant material is one or more types of cannabis. In some versions, the extracted oil contains one or more of: cannabidiol (CBD); cannabidivarin (CBDV); delta-9-tetrahydrocannabinol (THC); delta-8-tetrahydrocannabinol; tetrahydrocannabivarin (THCV); cannabinol (CBN); cannabigerol; cannabichromene; chemically converted cannabinoids; or other cannabinoids.

In some versions of the system or method, the extraction chamber is operated at a temperature of approximately 157 degrees Celsius (315 degrees Fahrenheit).

In some versions of the system or method, the extraction chamber is operated at a temperature of approximately 180 degrees Celsius (356 degrees Fahrenheit).

In some versions of the system or method, the extraction chamber is operated at a temperature of approximately 220 degrees Celsius (428 degrees Fahrenheit).

### BRIEF DESCRIPTION OF THE DRAWINGS

Figure 1 is a diagrammatic view of an embodiment of the present disclosure ;
Figure 2 is a diagrammatic view of an alternative embodiment of the present disclosure ;
Figure 3 illustrates an embodiment of a volatilization chamber designed to expose plant material entrained in the primary gas stream to a highly-turbulent and highly-agitatative environment to facilitate rapid volatilization of plant oils contained within the plant material;
Figure 4 illustrates an embodiment of the volatilization chamber that is also designed to expose the plant material entrained in the primary gas stream to a highly-turbulent and highly-agitatative environment to facilitate rapid volatilization of the plant oils contained within the plant material;
Figure 5 illustrates an embodiment of the volatilization chamber that is designed to centrifugally force the plant material into contact with the heated walls of the volatilization chamber to induce rapid volatilization of the plant oils;
Figure 6 illustrates an embodiment of the volatilization chamber that utilizes a modified form of pneumatic flash drying to induce rapid volatilization of oils within the plant material;
Figure 7 illustrates an embodiment of the volatilization chamber that is designed to prevent plant material that is still heavily laden with oils or has clumped together from escaping the volatilization chamber until it has been broken up into small particles and fully stripped of its desirable oils;
Figures 8a and 8b illustrate a cross-sectional and a top view of an additional embodiment of the volatilization chamber that is designed to prevent plant material that is still heavily laden with oils or has clumped together from escaping the volatilization chamber until it has been broken up into small particles and fully stripped of its desirable oils;
Figure 9 is a detailed view of a primary plant material separation device and a secondary plant material entrainment section, for use with some embodiments; and
Figure 10 illustrates an embodiment that utilizes a collection chamber containing wetted packing.

### DETAILED DESCRIPTION OF THE INVENTION

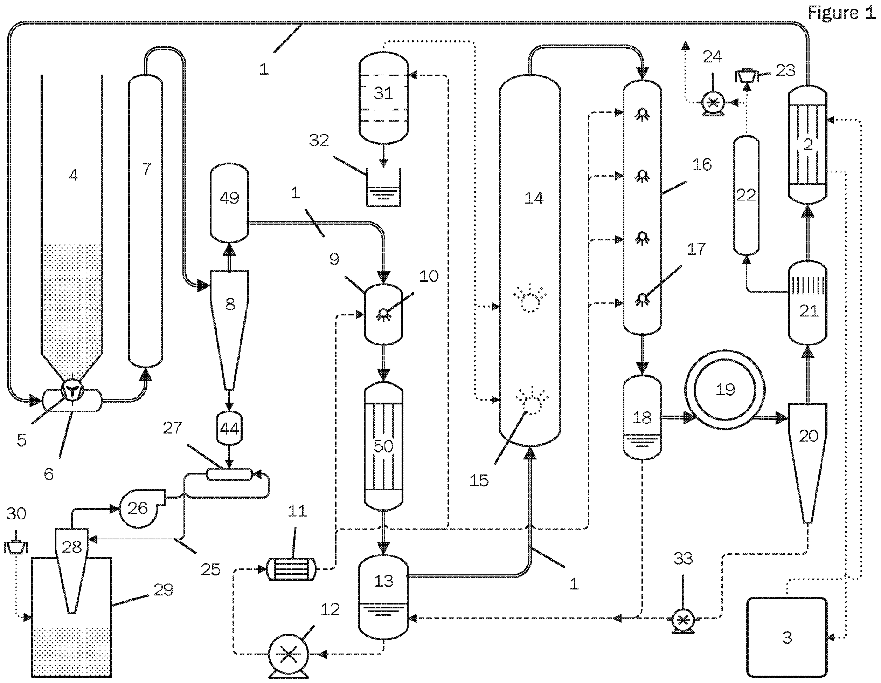

Figure 1 illustrates a diagrammatic view of the primary system parts of an embodiment of the present disclosure. A system is provided that includes a substantially closed network of passages and chambers containing a moving primary gas stream 1 (generically referred to in this disclosure as the "primary gas stream" or "primary gas flow"), a primary gas stream heater 2, a steam generator 3 to provide a heat source to the primary gas stream heater 2, a plant material or oil containing substrate hopper 4, a plant material portioning device 5, a primary plant material entrainment zone 6, a plant material volatilization chamber 7, a primary plant material separation device 8, an optionally heated separated plant material exit 44, a gas stream filter 49, a cooling and condensation section 9 for contacting the primary gas stream with a cooling collection solvent spray 10, a solvent spray cooler 11, a gas stream cooler 50, a primary pump 12 to provide pressurized collection solvent to various parts of the system, a sump area 13 to store collection solvent and separate collection solvent from the gas stream, an agglomeration chamber 14, a collection solvent vapor/steam introduction method 15, a collection chamber 16 for contacting the primary gas stream with a pressurized spray of collection solvent 17, a separation device or chamber 18 to remove a portion of the collection solvent spray from the primary gas stream 1, a primary gas stream mover 19, a collection solvent droplet separation device 20, a primary gas stream demister/polishing device 21, a collection solvent condenser 22, an out-only check valve 23 allowing gas to pass from the collection solvent condenser to the atmosphere, an air pump 24 capable of removing a portioned amount of gas from the system, a secondary gas stream 25 (generically referred to in this disclosure as the "secondary gas stream" or "secondary gas flow"), a secondary gas stream mover 26, a secondary plant material entrainment zone 27, a secondary plant material separation device 28, a processed plant material collection bin 29, an in-only check valve 30 to allow atmospheric air or a displacing gas into the system via the plant material collection bin 29, a thin film evaporator 31 or similar rapid evaporation device and a plant oil extract / final product collection container 32. Depending on the desired application, any of these components and parts may be duplicated within the system one or more times in series or in parallel or may eliminated entirely to attain different effects. The order of the components within the system may also be modified to attain different effects.

The primary gas stream 1 is propelled through the system by the primary gas stream mover 19. The primary gas stream may consist of atmospheric air, an inert gas such as but not limited to nitrogen, a reducing gas such as but not limited to CO2 or any other suitable gas or mixture. The primary gas stream mover 19 is preferably a regenerative blower, turbo blower, pressure blower or other form of centrifugal blower, however, the primary gas stream mover may consist of any mechanism or method capable of moving a gas. The gas stream may be kept above, below or equal to atmospheric pressure as required for different applications or effects. As the primary gas stream moves through the system, it passes through the primary gas stream heater 2. The primary gas stream heater is preferably a tube-in-shell heat exchanger that receives its heat in the form of saturated steam of a specific pressure and temperature provided by a steam generator 3 system, however, dry steam, a heated gas or other forms of heat exchange may be used, including but not limited to utilizing a hot oil or thermal fluid system whereby a heated fluid is pumped through the heat exchanger. Other forms of steam, gas or fluid powered heat exchangers may also be used as the application requires. Alternatively, the primary gas stream heater may use electric heating elements of various designs to heat the gas stream, including, but not limited to, star-wound heating coil designs. As the primary gas stream passes through the primary gas stream heater 2, the primary gas stream is heated to a temperature that is suitable to volatize one or more of the plant oil constituents present in the plant material.

After being heated, the primary gas stream 1 passes through a primary plant material entrainment section 6 of the system. The plant material supply is located in a hopper section 4 of the system. A portioned amount of plant material is introduced to the primary plant material entrainment section 6 via an auger screw, a rotary valve, a rotary airlock valve or any other suitable distribution mechanism 5. The plant material is preferably introduced to the system in a finely shredded or powdered form, however, other consistencies may also be used depending on what is most preferable in different applications. The plant material may be ground to the ideal or suitable consistency externally, or an integral grinder may be incorporated into the hopper 4, portioning device 5 or entrainment section 6 system as described in, but not in any way limited by, PCT/IB2014/002383. As non-limiting examples, a few of the many types of plant materials that may be processed using the present invention may include various forms of hemp or cannabis that may generally be classified as cannabis sativa, cannabis indica, cannabis ruderalis, hybridized crosses of various species or families of cannabis, or a mixture of one or more types of cannabis and/or other plant material. It should be noted that any plant material may be processed by the present invention and any plant oils may be targeted as the oils to be extracted.

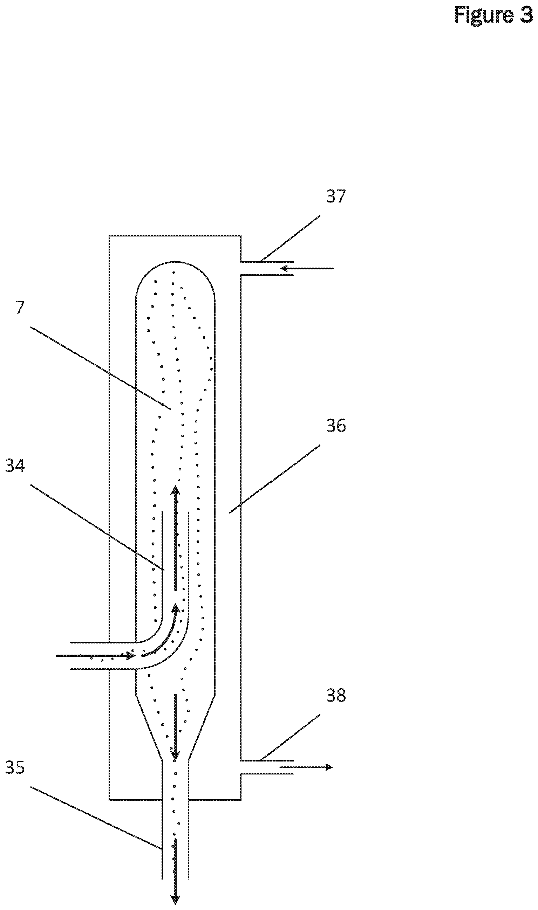

As the plant material is introduced to the primary entrainment section 6, the plant material becomes entrained in the heated primary gas stream 1. The entrained plant material travels with the primary gas stream into one or more volatilization chambers 7 placed in series or in parallel. The primary entrainment zone and the volatilization chamber/chambers may together define an extraction chamber and, in some embodiments, may be integrated with one another. Several methods may be used to achieve volatilization of the plant materials within the volatilization chamber, and this invention is not limited to any specific method of volatilization. A preferred way to volatilize the plant materials may be to use a form of pneumatic flash drying, however, adaptations of spray drying, spin drying, pneumatic ring drying, spin dryers with agitators, dryers with classifiers, dryers with agitators, bed drying, any of the volatilization methods proposed in the figures or text of this disclosure or any other method suitable to volatilize the plant materials may be used. Each of these methods will be known to those who are skilled in the art of drying food products, pharmaceutical products and industrial materials, however, the way that this invention is using these methods is unique. A detailed view of several embodiments of the volatilization chamber 7 is illustrated in Figures 3, 4, 5, 6, 7, 8a and 8b, and will be discussed in greater detail in the following sections of this disclosure.

Inside of some versions of the volatilization chamber 7, the plant material is agitated and circulated while being exposed to the heated primary gas stream to cause rapid volatilization of particular plant oils that volatilize near, at or below the temperature maintained within the volatilization chamber by the primary gas stream. In other embodiments, the plant material is forced into contact with a heated surface within the volatilization chamber. The temperature of the gas stream exiting the heater 2 may be adjusted to maintain a desired temperature in the volatilization chamber/s and to counteract any temperature losses as the gas stream travels from the heater 2 to the volatilization chamber/s 7. As will be discussed in detail in other sections of this disclosure, in some embodiments it is also possible to directly heat the volatilization chamber. In most embodiments, targeting a specific temperature within the volatilization chamber will volatilize plant oil compounds that volatilize near or below such a temperature. In order to isolate separate oil compounds, a method of successively processing the plant material at increasing temperatures over multiple extraction cycles may be used to fractionally isolate specific oils or specific groups of oils. Alternatively, a sufficiently high temperature may be selected to volatilize a range of targeted plant oils in a single extraction cycle. Such methods will be well understood by those of skill in the art. In some applications, it may be preferable to exclude a dedicated volatilization chamber from the system if a sufficient volatilization function can be obtained in the primary plant material separator 8. This is discussed in greater detail in a following section.

When cannabis is selected as the plant material to be processed, the preferred oils to be volatilized may include the various chemical forms of cannabidiol (CBD), cannabidivarin (CBDV), delta-9-tetrahydrocannabinol (THC), delta-8-tetrahydrocannabinol, tetrahydrocannabivarin (THCV), cannabinol (CBN), cannabigerol, cannabichromene, chemically converted cannabinoids or any other cannabinoid. Other valuable terpenoid oils that may be extracted from cannabis may include the various chemical forms of linalool, caryophyllene, myrcene, limonene, humulene, pinene. By manipulating the temperature of the gas stream and/or heated surfaces that contact the plant materials within the volatilization chamber and completing successive extraction cycles, it is possible to isolate the various plant oils into substantially purified fractions. Alternatively, it is possible utilize a wider temperature band within the volatilization chamber to extract a range of plant oils in a single extraction cycle. As non-limiting examples, the following volatilization chamber temperatures may be utilized to extract various types of oils from cannabis: To target the extraction of delta-9-tetrahydrocannabinol, the temperature within the volatilization chamber should be kept near 157 degrees Celsius (315 degrees Fahrenheit). To target a mostly purified form of cannabidiol, the temperature should be kept near 157 degrees Celsius (315 degrees Fahrenheit) in the first extraction cycle to first remove the delta-9-tetrahydrocannabinol from the plant material, and then the plant material should be processed a second time at a temperature near 180 degrees Celsius (356 degrees Fahrenheit). to remove the remaining cannabidiol. To target extraction of both delta-9-tetrahydrocannabinol and cannabidiol in a single extraction cycle, the temperature within the volatilization chamber should be kept near 180 degrees Celsius (356 degrees Fahrenheit) to volatilize both delta-9-tetrahydrocannabinol and cannabidiol in the same cycle. To target extraction of tetrahydrocannabivarin and all cannabinoids with a volatilization temperature below that of tetrahydrocannabivarin, the temperature of the volatilization chamber should be kept near 220 degrees Celsius (428 degrees Fahrenheit). Other combinations of different temperatures or successive extraction cycles may be used to target other oil compounds. Further discussion of temperatures and temperature ranges can be found in following sections of this disclosure.

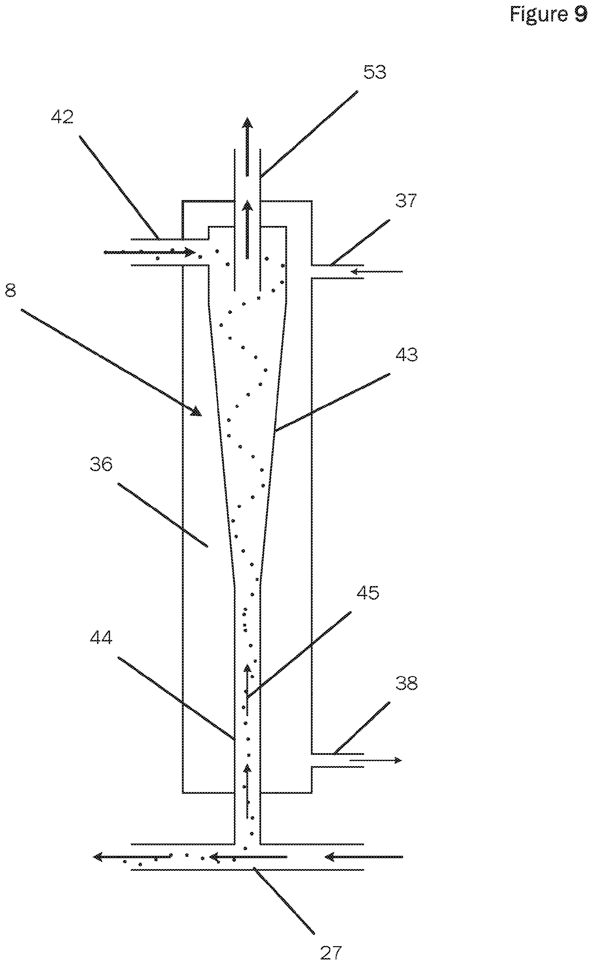

After circulating within the volatilization chamber 7, the processed plant material and the volatilized plant oils may travel with the primary gas stream into a primary plant material separator 8. The oil may be referred to as an extracted oil. A detailed view of an embodiment of the primary plant material separator 8 is illustrated in Figure 9 and will be discussed in greater detail in a following section of this disclosure. The processed plant material separator 8 is preferably a cyclone or centrifugal separator, however other centrifugal or non-centrifugal separation methods may be used to achieve the same or similar results. The primary plant material separator 8 separates the processed plant material from the primary gas stream containing the volatilized plant oils. The separated plant material exits through the bottom of the primary plant material separator, while the primary gas stream, along with the volatilized oils, exits through the top of the primary separator substantially free of entrained plant material. It should be noted that the positioning of the separated plant material exits and primary gas stream exits may be flipped or vary in placement depending on the differing requirements of the primary plant material separator design. Altering the placement of the exits should not be interpreted as being outside the scope of this invention.

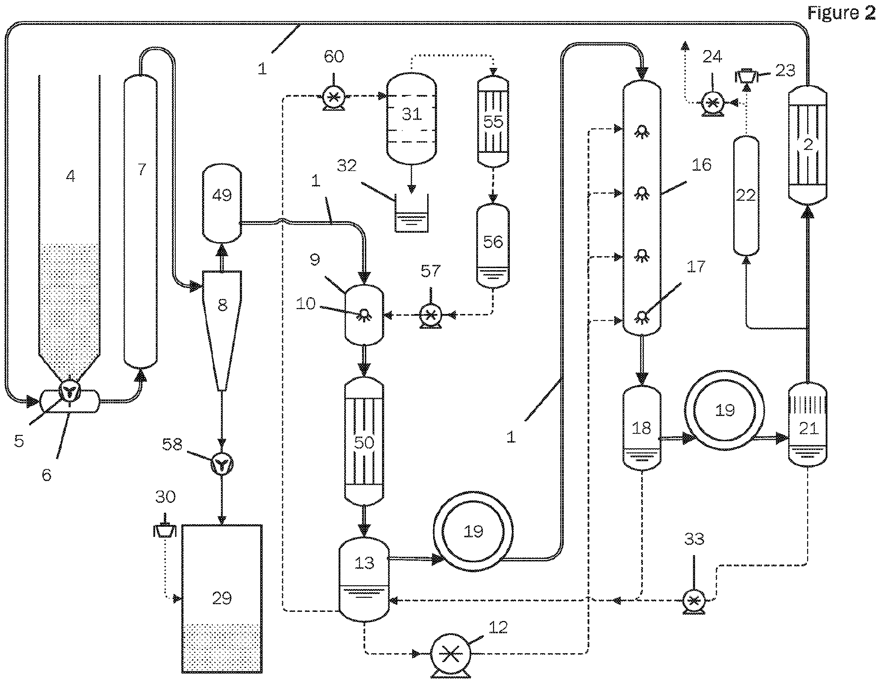

The separated processed plant material exiting the primary plant material separator 8 may optionally become entrained in a secondary gas stream 25 in a secondary entrainment zone 27, or may simply be in communication with a collection bin 29. The secondary gas stream 25 is propelled by a secondary gas stream mover 26, which is preferably a centrifugal blower. However, any other method of propelling the secondary gas stream may be used. The secondary gas stream is preferably kept at a lower temperature than the volatilization temperature of the plant oils in order to cool the processed plant material and prevent any continued volatilization or scorching from occurring. The processed plant material travels with the secondary gas stream into a secondary plant material separator 28. The secondary separator 28, which is preferably but not limited to a cyclone or centrifugal separator, separates the processed plant material from the secondary gas stream. However, any method capable of separating some or all of the processed plant material may be used. The processed plant material exits through the bottom of the secondary separator and is collected in a processed plant material collection bin 29. The secondary gas stream exits through the top of the secondary separator 28 substantially free of entrained plant material and continues to recirculate through the secondary gas stream loop 25. Other forms of plant material separation and collection may be used, such as the methods commonly employed in shop vacuum cleaners. Alternatively, a simple method of allowing the processed plant material to drop as a result of gravity or be mechanically propelled with an auger screw or other mechanical device from the bottom of the primary plant material separator 8 into a bin or disposal area may be used to avoid the need for a secondary gas stream 25 and the parts required for a secondary gas stream system. If such an alternative is used, it may be preferable in some applications to provide an airlock valve, flapper valve or other method of isolating the primary plant material separator from the outside atmosphere. One possible method of placing the primary plant material separator 8 is illustrated in Figure 2, however, other methods may also be used.

The primary gas stream 1 and volatilized oils that exit the top of the primary separator 8 may optionally pass through a gas stream filter 49. The gas stream filter 49 is preferably designed to remove any or most of the remaining fine particulates from the gas stream that are not captured by the primary plant material separator. The gas stream filter 49 is preferably constructed of suitable materials to withstand the temperature of the heated gas stream. Such materials may include, but are not limited to, fiberglass filters or strainers, stainless steel or metal filters or strainers, sintered metal or glass filters, ceramic filters, or filters constructed of any other suitable materials.

After exiting the gas stream filter 49, the primary gas stream 1 and entrained volatilized oils travel into a cooling chamber 9, which may take the form of a cooling spray section 9, as shown. In embodiments that do not include a gas stream filter 49, the primary gas stream and entrained volatilized oils may travel into the cooling spray section 9 after exiting the primary plant material separator 8. Inside the cooling spray section 9, the primary gas stream 1 and entrained volatilized oils are contacted with a cooling spray 10 of a collection solvent that is emitted from one or more sprayers. The cooling spray 10 is supplied by a primary pump 12 that moves collection solvent to various sprayers and other areas throughout the system. As illustrated in Figure 1, the primary pump 13 draws collection solvent from the sump area 13, however, in other embodiments, the primary pump 12 may draw collection solvent from other areas or other solvent reservoirs. In some embodiments, it is preferred that the cooling spray instead be supplied by a dedicated pump that draws from a reservoir or other source of substantially purified collection solvent. An example of such an embodiment is illustrated in Figure 2 and a further description of such an embodiment is included in the sections of this disclosure that discuss the evaporation device 31.

The collection solvent may be optionally cooled by a collection solvent cooler 11. The collection solvent cooler 11 may be placed within the system such that it only cools the collection solvent before reaching the cooling spray section 9 or it may be placed before or after the primary pump 12 such that collection solvent spray traveling to any parts of the system are cooled. The collection solvent cooler 11 is preferably designed as liquid-cooled tube-in-shell heat exchanger or plate heat exchanger, however, air-cooled designs or any other suitable heat exchange device may be utilized. The collection solvent cooler 11 may be cooled by any type of fluid or gas. The cooling supply may be a liquid or gas that is pumped through an air-cooled or liquid-cooled heat exchange device, a municipal water supply or any other suitable method. It should be noted that, in some embodiments, providing sufficient cooling to the collection solvent system can provide cooling and temperature regulation of the entire system, in addition to that which is required to provide cooling to the cooling section 9. A further discussion of potential heat exchanger designs can be found in the sections of this document describing the gas stream cooler 50 and evaporation device 31 condenser. The designs and cooling methods used for the collection solvent cooler 11, gas stream cooler 50, the solvent recovery device 22 and evaporation device 31 condenser may be used interchangeably as needed for each cooler or condenser device to function as required in different embodiments and applications.

Upon being contacted with the cooling spray 10 within the cooling spray section 9, the primary gas stream is cooled and the volatized oils within the primary gas stream begins to condense. Preferably, the system and the flow rates of the gas stream and cooling spray solvent are designed such that a large portion of the volatilized oils condense directly on the surface of the cooling spray droplets, where they become directly captured in the collection solvent and drain directly or through other components of the system to reach the sump area 13 of the system. Much or all of the oils that do not condense on the droplets, condense within the gas stream into a fog of small and microscopic oil droplets, which travel out of the cooling section 9 entrained in the primary gas stream 1. While it is preferred to use a cooling spray 10 as a gas stream cooling and oil vapor condensation method, other methods may be used, including but not limited to contacting the primary gas stream with cooling coils, passing the primary gas stream through a tube-in-shell heat exchanger, or introducing a cooling gas directly into the primary gas stream. As such, element 10 may represent any of these components or more than one such component.

Upon exiting the cooling spray section 9, the primary gas stream may optionally pass through a gas stream cooler 50. The gas stream cooler 50 cools the gas stream, the entrained oil droplets and the mixture of collection solvent and captured plant oils preferably to a temperature that is sufficient to prevent heat degradation of the plant oils. The gas stream cooler 50 is preferably designed as a tube-in-shell heat exchanger that uses a flow of liquid or gas as a coolant medium. However, any air or liquid-cooled device may be used, including but not limited to exposing the gas stream to contact with vapor compression or absorption chiller coils. For liquid cooled designs, any coolant may be used, including but not limited to municipal water, water or various types of coolant fluids pumped or moved with the aid of a pump, vapor compression or absorption chiller coils or any other suitable method. The liquid coolant may be cooled using forced air, passive air, a vapor compression or absorption chiller, heat exchange with another liquid or any other suitable method. For air-cooled gas stream cooler designs, the gas stream cooler 50 may be cooled with forced air that is moved by the aid of an air mover, cool air from a vapor compression or absorption chiller, evaporative cooling from a swamp cooler or similar device or by passive contact with the surrounding atmosphere. It should be noted that providing sufficient cooling to the gas stream cooler 50 can provide cooling and temperature regulation of the entire system. It is preferred that the gas stream cooler be placed directly after a cooling spray 10 or collection solvent spray section such that the collection solvent washes any condensed oils from the gas stream cooler 50 and such that the time that the collection solvent and plant oils are exposed to heat is minimized, however, other placements may be used.

After exiting the optional gas stream cooler 50, the primary gas stream containing a fog of any entrained oil droplets that were not previously captured by the cooling spray, enters a sump section / liquid separator 13. In embodiments that do not include a gas stream cooler 50, the primary gas stream and entrained oil droplets may enter the sump section 13 after exiting the cooling spray section 9. The sump section 13 separates the majority of the liquefied collection solvent and extracted plant oil mixture from the primary gas stream and serves as a holding area for the collection solvent and captured extracted plant oil. In some applications, it may be desirable to incorporate a separate liquid separator (not shown) before the sump section 13 to facilitate separation of the collection solvent from the primary gas stream. Such a separate liquid separator could be as simple as a tee or bend in the gas stream path or may include demisting pads or other more advanced methods of separation. In some embodiments, a separate collection solvent reservoir (not shown) containing substantially purified collection solvent may also be included as a method to replenish any collection solvent that is lost or removed from the system as it operates.

After passing through the sump area 13, the primary gas stream and the fog of entrained oil droplets optionally enter an agglomeration section 14. The diameter of the agglomeration section 14 is preferably larger than that of the other passages within the primary gas stream loop 1 or is otherwise designed to be large enough to lower the velocity of the primary gas stream and maximize the time that the primary gas stream and the fog of oil droplets remain within the agglomeration section 14. It is also possible to use a longer agglomeration section, adjust the gas stream velocity, or use multiple agglomeration sections in parallel or in series to attain a similar result of maximizing the time that the oil droplets spend in the agglomeration section. Within the agglomeration section, the gas stream and fog of oil droplets are contacted with collection solvent vapor provided by collection solvent injectors 15. The collection solvent vapor 15 condenses on the surface of the cooler oil droplets, causing them to grow larger and increase in size and mass. Increasing the size and mass of the entrained oil droplets greatly enhances their removal from the gas stream in subsequent sections of the system. The preferred source of the collection solvent vapor is from the distilled collection solvent outlet of the evaporation device 31, however, other methods of providing collection solvent vapor may be used. Alternatively, mixing a cooler gas stream with a wanner gas stream as it enters the agglomeration section will achieve a similar result. Such an alternative method is described in PCT/IB2014/002383. Any collection solvent and other liquids that condense or coalesce on the surfaces within the agglomeration section 14 eventually drain down the agglomerator walls and into the sump area 13 of the system. Preferably, the diameter of the entrance of the agglomeration section and the passages leading from the sump area 13 to the agglomeration section 14 should be designed to be large enough to reduce the velocity of the primary gas stream such that condensing liquids can easily drain against the flow of the primary gas stream to reach the sump area 13. However, this may not be a requirement in some applications or with certain positionings of the agglomeration chamber within the system, such as when the gas stream enters through the top of the agglomeration section and exits through the bottom, for example.

After exiting the optional agglomeration section 14, the primary gas stream 1 and mist of enlarged oil droplets enter a collection chamber section 16. In embodiments that do not include an agglomeration section, the primary gas stream and entrained oil droplets may enter the collection chamber section 16 after leaving the sump section 13. In the collection chamber 16, the oil droplets entrained in the primary gas stream are bombarded with a high pressure spray 17 of collection solvent droplets emitted from one or more collection solvent sprayers 17. Any oil droplets that are impacted with collection solvent droplets 17 are effectively captured in the collection solvent, which collides with the walls of the collection chamber 16 and eventually drains to the sump area 13. Upon exiting the collection chamber, most of the larger oil droplets have been removed from the primary gas stream, although some of the smallest, oil droplets may still remain. It should be noted that in some embodiments that do not include a dedicated cooling section or cooling spray section 9 or a dedicated collection chamber 16, the collection chamber section 16 could be considered to be the cooling section 9 and the cooling 9 section could be considered to be the collection chamber 16 section. In other words, the function of both the cooling spray section and the collection chamber section could be combined into one section in some embodiments of the system. In such embodiments where these sections are combined, it is preferred that the combined cooling spray/collection chamber section be located directly after the primary plant material separator 8 or directly after the gas stream filter 49, and in front of the gas stream cooler 50. However, other arrangements may be used. It should also be noted that in some embodiments the cooling section may be considered to be the gas stream cooler 50 or another cooling device or cooling area.

The primary gas stream optionally travels onward through a secondary liquid separation section 18. The secondary liquid separation section 18 separates the majority of the collection solvent from the primary gas stream to prevent the primary gas stream mover 19 from being overwhelmed by collection solvent. The secondary liquid separation section 18 may be as simple as a tee or bend in the gas stream passage or may include more advanced separation methods. The separated collection solvent drains from the liquid separation section 18 and back into the sump section 13 of the system. In some embodiments, the liquid separation section 18 may not be needed, depending on the ability of the primary gas stream mover 19 to handle entrained liquids. In other embodiments, it may be desirable to intentionally introduce some liquid into the gas stream mover 19 to facilitate cleaning and/or cooling of the gas stream mover 19.

The primary gas stream exiting the liquid separation section 18 enters the primary gas stream mover 19. In embodiments that do not include a liquid separation section 18, the primary gas stream enters the primary gas stream mover 19 after leaving the collection chamber 16. The primary gas stream mover 19 is preferably a regenerative blower, turbo blower, pressure blower or another type of blower that subjects the gas stream to a high level of centrifugal force, however, any method of propelling the primary gas stream may be used. Upon entering the primary gas stream mover 19, the primary gas stream is subjected to high centrifugal forces. Much or all of the remaining small and microscopic oil droplets and collection spray mist droplets that were not captured in preceding sections of the system impinge with the blades and housing of the primary gas stream mover 19. The oil and collection solvent droplets that impinge with the blades and housing of the gas stream mover 19 are effectively captured and removed from the primary gas stream. The captured oil and collection solvent drains from the exit of the primary gas stream mover or from a liquid drain port (not shown) within the gas stream mover, eventually reaching the sump section 13 of the system. In some embodiments, the gas stream mover may be utilized as the primary method of separating the entrained plant oil droplets from the gas stream. In such embodiments, it is preferable that the gas stream mover be supplied with a spray or stream of collection solvent to facilitate in washing the captured plant oils from the blower blades and housing. In such an embodiment, the gas stream mover or gas moving device may be considered part of the collection chamber and/or the gas moving device may form the only collection chamber for certain versions. The arrangement of the gas stream mover within the system may also be altered depending on the embodiment and application.

In some embodiments, the primary gas stream exiting the primary gas stream mover 19 travels into an optional droplet separator 20. This droplet separator 20 is preferably a cyclone or centrifugal separator, although other methods may be used. The droplet separator separates much or all of the remaining liquid droplets from the primary gas stream. The separated collection solvent and oil drains from the separator 20 into the sump area 13 of the system.

To prevent a portion of the primary gas stream from bypassing the main gas stream loop and traveling through the drainage tube of the optional droplet separator 20, and to otherwise prevent a pressure differential in the system from affecting drainage, an optional positive displacement / airlock pump 33 or similar device may be used to facilitate the drainage of the droplet separator 20 to the sump section 13 of the system. Such an airlock / pump 33 or similar device may also be used in embodiments that do not include an optional droplet separator 20 to facilitate drainage directly from the primary gas stream mover 19. An airlock / pump 33 or similar device may also be used for a similar function in embodiments that include the optional demister / polishing section 21 described in the following paragraph.

After exiting the droplet separator 20, the primary gas stream optionally enters a demister / polishing section 21. In embodiments that do not include a droplet separator 20, the primary gas stream may enter the demister / polishing section 21 after exiting the gas stream mover 19. The polishing section 21 polishes the primary gas stream and serves as a final droplet separation stage to remove much or all of the remaining collection solvent droplets prior to the primary gas stream passing through the primary gas heater. Providing effective droplet separation in the polishing section 21 and/or any preceding droplet separation sections prevents any droplets containing plant oils from coming in contact with the heated sections of the primary gas stream heater 2, thus preventing plant oils from burning, fouling or breaking down on the hot heater surfaces.

When the system is initially heated, the gases within the system will expand and may attempt to exit the system through any poorly sealed areas. Likewise, when the system is cooling, the gases within the system will contract. In order to prevent pressure or vacuum from building in the system, some embodiments provide a method of connecting the closed portion of the system to the atmosphere. Connection to the atmosphere is established through a solvent recovery device 22 such that as gases pass out of the system, any evaporated collection solvent is condensed and returned to the system. The solvent recovery device 22 is preferred to prevent collection solvent or volatilized plant oils from entering the surrounding atmosphere. The solvent recovery device 22 may utilize any known method of solvent recovery, including but not limited to a cold trap, a condensation tube, a filter, a distillation column, a commercially available solvent recovery system or any other suitable method. The solvent recovery device 22 may also contain a carbon filter or other type of odor capturing filter to prevent odors from escaping the system. Various condenser designs may be employed as the solvent recovery device 22, including any of the condenser designs discussed below in the paragraphs describing the evaporation device condenser 55.

An optional out-only check valve 23 is attached to the exit end of the solvent recovery device 22 to allow expanding gases to escape from the system when the system is heating and to prevent any atmospheric gases from traveling backwards into the system through the solvent recovery device 22 when the system is cooling. To allow atmospheric gases to enter the system when the system is cooling, an in-only check valve 30 may be connected to the processed plant material collection bin 29 or other places within the system.

Since the processed plant material will be removed from the system via the collection bin 29, it is desirable in some embodiments that collection solvent vapors be evacuated from this portion of the system to prevent their escape into the surrounding atmosphere. To keep this area evacuated of solvent vapors during times that the system is not cooling and thus naturally drawing gases in from the atmosphere, an evacuation pump 24 may be attached to the exit of the solvent recovery device 22. By continuously drawing a small amount of gas through the solvent recovery device 22 at all times, a small amount of vacuum is generated in the system, which draws fresh atmospheric gases into the processed plant material collection bin 29 via the in-only check valve 30, therefore displacing collection solvent vapors from the bin. An additional benefit of using an evacuation pump 24 in this manner is that the potential for solvent vapors escaping through any leaky seals within the system is mitigated. As an alternative to the evacuation pump, a displacing gas may be introduced to the processed plant material bin or any other areas within the system that are deemed desirable to displace. A preferred displacing gas would be CO2 or nitrogen, however, other displacing gases may be used. It should be known that utilizing an evacuation pump 24 or displacing gas is beneficial for multiple purposes (including preventing the condensation of volatilized oils at the plant material exit of the primary plant material separation device 8) and such use is not in any way dependent on a need to evacuate the processed plant material collection bin 29.

As will be discussed in a following section of this disclosure in greater detail when describing the primary plant material separator 8 and secondary plant material entrainment section 27 illustrated in Figure 9, the evacuation pump 24 and/or addition of a displacing gas creates a slight backflow through the plant material separator 8 and serves an important function to prevent volatilized plant oils from escaping from the separated plant material exit 44 of the primary plant material separator 8 and condensing on the separated plant material exit 44 of the primary plant material separator 8 and/or the parts within the secondary gas flow loop 25 and/or processed plant material bin 29. If plant oils condense in these areas, it could cause plant material to stick to the internal surfaces of these parts and block the flow of separated plant material to the collection bin 29. While a passive method of evacuating plant oil vapors from these areas to prevent condensation is preferred, in some embodiments, it may be beneficial to include an auger screw or mechanical scraping method to ensure that these parts never become clogged.

In order to separate the captured plant oils from the collection solvent and plant oil mixture, some versions of the invention may optionally include an oil/solvent separation system such as an evaporation device 31. The evaporation device 31 is preferably, but not limited to, an evaporation device such as a thin film evaporator, wiped film evaporator, short path evaporator, rising film evaporator, falling film evaporator, spray dryer evaporator, centrifugal thin-film evaporator, or a conventional still design such as, but not limited to, stills that are commonly used to distill ethanol-based spirits. However, any suitable evaporation device may be used and one or more evaporation devices may be used alone or in combination for enhanced evaporation or multiple effect evaporation. Non-evaporative oil separation devices may alternatively be utilized. The evaporation device 31 may be operated at atmospheric pressure, under vacuum or above atmospheric pressure. Heat may be supplied to the evaporation device using electric heating elements, steam from a steam generator, a hot oil system, a thermal fluid, a heated gas or any other suitable method of supplying heat. In the case that the evaporation device is a thin film or wiped film evaporator, it is preferred that heat be supplied to the evaporator by wrapping the evaporation section with heat cables or by including a steam jacket or thermal fluid jacket around the evaporation section of the device and providing heat with a steam generator or thermal fluid system. In the case that the evaporation device is a rising film or falling film evaporator, it is preferred that heat be supplied to the falling or rising film section by a steam generator or thermal fluid system.

As the system is running, or in some embodiments, after the system has completed an extraction cycle, the evaporation device 31 draws a portioned flow of the mixture of collection solvent and captured plant oils from the sump area of the system by diverting some of the pressurized solvent from the primary pump 12 with the aid of a proportional valve, solenoid valve or other suitable diversion and/or portioning method (not shown) or with the aid of a dedicated feed pump 60 (shown in Figure 2). Upon entering the evaporation device 31, the collection solvent is evaporated and distilled from the solvent and plant oil mixture and the solvent is reintroduced to the system as a substantially purified collection solvent. In the embodiment illustrated in Figure 1, the purified collection solvent is reintroduced to the system as a vapor via collection solvent vapor injectors 15 in the agglomeration section 14 of the system. In this manner, the evaporated collection solvent vapors may be used to facilitate the function of the agglomeration section 14. The purified collection solvent may additionally or alternatively be introduced as a vapor to other sections of the system to aid in cleaning of the various components or serve other functions as required.

When the mixture of collection solvent and captured plant oils are introduced to the evaporation device, the plant oils, which preferably have a higher boiling point than the collection solvent utilized, do not readily evaporate within the evaporation device 31 and are concentrated into a substantially pure form as the collection solvent is distilled away. The concentrated plant oils exit the evaporation device 31 as a substantially pure extract which is subsequently collected in an extract collection area 32 as a final product of the system. Additional discussion of evaporation methods can be found in PCT/IB2014/002383, however, these methods should not be viewed as limiting. As an alternative to an evaporation device, other methods of separating the plant oils from the collection solvent may be used. In embodiments that use collection solvents that are immiscible with the plant oils being collected, stratification methods of separation may be employed. Chromatography methods may also be used to separate the oils from the collection solvent. Such methods serve as examples and are not limiting. Those of skill in the art will be able to determine the best separation method for different applications of the current invention.

Figure 2 illustrates an additional embodiment of the present invention. In Figure 2, the substantially purified collection solvent vapor exiting the evaporation device 31 passes through a condenser 55 to condense the collection solvent vapor into a liquid. The liquefied collection solvent exiting the condenser 55 flows into a purified solvent reservoir 56. A dedicated collection solvent pump 57 draws the substantially purified collection solvent from the purified solvent reservoir 56 and sprays the purified collection solvent directly into the cooling spray section 9 via the cooling spray 10. Alternatively, the purified solvent may be pumped directly from the condenser 55. Arranging the system in a manner whereby only substantially pure collection solvent is used in the cooling spray section 9, rather than recirculating collection solvent from the sump area 13, ensures that previously captured plant oils are not exposed to further heat by contacting the heated gas stream prior to it being cooled. In other applications and embodiments, it may be desirable to reintroduce the condensed collection solvent directly to the sump area 13 or any other area of the system where it is needed.

In embodiments of the invention where the evaporation device 31 includes a condenser 55, any condenser design may be used, including but not limited to liquid-cooled designs such as a Liebig, Allihn, Graham, Dimroth, Fridrichs or tube-in-shell condenser, or air cooled designs such as spiraled tubes, radiator style condensers or other designs that will be readily known to those of skill in the art. For liquid-cooled condenser designs, any coolant may be used, including but not limited to municipal water, water or various types of coolant fluids pumped or moved with the aid of a pump, vapor compression or absorption chiller coils or any other suitable method. The liquid coolant may be cooled using forced air, passive air, a vapor compression or absorption chiller, heat exchange with another liquid or any other suitable method. For air-cooled condenser designs, the condenser may be cooled with forced air that is moved by the aid of an air mover or by passive contact with the surrounding atmosphere. Such condenser designs and cooling methods may also be employed in the solvent recovery device 22, as mentioned above.

It is highly desirable to keep the internal surface temperatures of all portions of the system that contact the gas stream between the gas stream heater 2 and the first areas exposed to collection solvent or another cooling method near or above the condensation temperature of the volatilized plant oils. This is beneficial to prevent condensation of volatilized oils on undesired surfaces within the heated portions of the system, which could potentially damage the oils and/or hinder their recovery from the system. In order to maintain the temperature of the gas stream and to prevent condensation of volatilized oils on undesired surfaces within the heated portions of the system, in many embodiments of the invention it will be advantageous to house all or most of the heated portions of the system, including but not limited to all, some or any combination of the gas stream heater 2, the primary plant material separator 8, the primary plant material separator lower exit 44 (discussed in further detail in a following section), the optional gas stream filter 49 and the volatilization chamber/s 7, together in one passively insulated or actively heated box or heated chamber to simplify the insulating or heating of such components. Such a heated chamber may be passively insulated with a thermal insulation barrier such as fiberglass, ceramic wool, silica insulation, calcium silicate, aerogel, ceramic insulation, rock wool, mineral wool or any other suitable insulating medium. If the heated chamber is actively heated, electric elements may be used within the open space of the oven cavity with or without the aid of a convection fan, or a heated gas may be pumped through the oven chamber. Alternatively, the heated parts may be housed together in a vacuum chamber of suitable size for passive insulation, or a steam chamber of suitable size that may be supplied with steam as a heat source for active heating. The heated parts may also be wrapped with a heating cable. Finally, the heated parts may be contained in a chamber with a thermal heating liquid. Any heating or insulating method known to those of skill in the art may be utilized and still fall within the scope of this invention. It should be known that in most embodiments it may be important to construct the gas stream path such that the hopper section 4 is not housed within the oven chamber, yet is able to provide plant material to the entrainment zone 6. In embodiments wherein the heated components of the system are not contained within a heated box / oven chamber, or in embodiments wherein additional heating or insulation of the heated components is required, the heated components may be individually insulated or actively heated as discussed in the following sections of this document.

In some embodiments, a method of cooling the overall system must be used to prevent the system from overheating. Various methods of cooling the overall system using the collection solvent cooler 11 and/or the gas stream cooler 50 have been discussed in this disclosure. Additional methods, such as, but not limited to, circulating forced air or a cooling fluid over the external parts of the system may also be used. Passive methods of cooling the system, such as, but not limited to, including cooling fins or protrusions on various components of the system and gas stream loop may also be employed. It is also possible to house the system in a room or chamber of a regulated temperature. Further discussion of various additional cooling methods can be found in PCT/IB2014/002383.

Since the gas stream in most embodiments of the present invention will be saturated with collection solvent vapors in some areas, it is possible to promote an environment in the cool sections of the system that causes collection solvent vapors to condense on the internal surfaces of these sections. By causing collection solvent to condense on the internal surfaces of the cool sections of the system, the condensing collection solvent can be used to aid in washing these surfaces of any accumulated plant oils. To promote such a "condensation washing" environment, it is desirable to always keep the gas stream warmer than the internal surfaces of any areas of the system that contact the gas stream after the first cooled section of the system and before the gas stream heater section. Exceptions to this are the hopper section, the secondary gas stream 25 sections and separated plant material bin 29, where it is not desirable to have condensing collection solvent. The solvent that condenses on the internal surfaces of the cool sections of the system, along with any accumulated oils, drain through the system to eventually be collected in the sump area 13. Additional methods of "condensation washing" are described in PCT/IB2014/002383. Other methods may also be used.

The various valves, pumps, airlocks, electrical heaters and/or steam heaters, and any other controllable components of the system described in this disclosure may be regulated or controlled by mechanical methods and/or electronic temperature and/or pressure switches. It is, however, preferred that the temperatures and pressures within the system, the optional steam generator, evaporation device and various pumps, valves, airlocks, gas movers and other controllable components within the system be controlled by one or more programmable logic controllers (PLC control) and/or proportional integral derivative controllers (PID control) and/or other forms of computerized controls. Utilization of such electronic devices may achieve more precise control of the temperatures, pressures and various actions of the system. When electronic controls are implemented, the temperatures may be monitored by thermocouples, resistance temperature detectors (RTD sensors) and/or other temperature detection methods, the pressures may be monitored by electronic pressure sensors and/or mechanical pressure devices and/or other detection methods, the gas flow and liquid flow may be detected by electronic mass flow meters, pressure sensors, pressure differential sensors, Coriolis meters and/or other detection methods, the position of components may be detected with limit switches, position sensors, proximity sensors and/or other detection methods, the levels of fluids may be detected with optical, electrical, conductive, ultrasonic, capacitive, float switches and/or other detection methods and the levels of dry materials may be detected with optical, electrical, conductive, ultrasonic, capacitive, float switches, rotary dry level detectors and/or other detection methods. It may also be desirable to include sensors that can detect the saturation levels of water, plant oils or other liquids that have accumulated in the collection solvent mixture, such as capacitance sensors, conductivity sensors, specific gravity sensors, moisture sensors, refractometers or other types of sensors. Other sensors of various available designs may also be utilized as needed to measure the state of the various components and still fall within the scope of this invention. Non-limiting examples of how such thermocouples, sensors and devices that may be placed within the present invention can be found in PCT/IB2014/002383, however, the placement of sensors will be apparent to those who are skilled in the art. The various temperature, pressure, flow rate and other sensors may be placed within any section of the system, in any quantity and in any order and still fall within the scope of this invention. The various PLC, PID, computer or other control methods may regulate components within the system with various types of commercially available digital, analog and/or other types of input/output modules (IO modules), stepper controllers, variable frequency controllers, solid state relays, conventional magnetic relays and/or any other suitable method.

Figure 3 provides a detailed view of an embodiment of the volatilization chamber section of the system. The purpose of the volatilization chamber is to expose the plant material entrained in the primary gas stream to a turbulent and/or agitated environment to maximize contact with the gas stream and facilitate rapid volatilization of the plant oils contained within the plant material. This disclosure describes multiple methods to attain these results, including omission of the volatilization chamber in favor of a primary plant material separator with heated walls, however, other methods may be used to attain similar results and still fall within the scope of this invention. As illustrated in Figure 3, the primary gas stream carries the entrained plant material into the volatilization chamber through an upward facing entry tube 34. Upon leaving the tip of the entry tube 34, which may include a high-velocity nozzle tip in some applications, the entrained plant material is blasted upward toward the top of the volatilization chamber 7. As the plant material travels upward, it is exposed to a turbulent reversal of the gas stream flow within the volatilization chamber. This action causes forceful agitation of the plant material and maximizes its contact with the heated primary gas stream to facilitate rapid volatilization of the plant oils contained within the plant material. The primary gas stream, along with the entrained plant material, exit the volatilization chamber through an exit passage 35 at the bottom of the chamber and travel onward to the primary plant material separator 8. One or more volatilization chambers of this type may be used in series or in parallel or in combination with other types of volatilization chambers. As such, element 7 in Figure 1 and Figure 2 may represent one or more volatilization chambers.

In order to maintain a sufficient temperature of the gas stream as it passes through the volatilization chamber and to prevent condensation of volatilized oils on surfaces within the volatilization chamber, it is preferred that most embodiments of the volatilization chamber discussed within this disclosure be contained or wrapped in a thermal insulation barrier and/or be provided with an active heat source. Such a heat source or thermal barrier may optionally be eliminated if the volatilization chamber/s are housed together with all or some of the other heated sections of the system within an insulated or heated chamber as discussed above. As a non-limiting example that may be applied to any of the embodiments of the volatilization chamber discussed or referred to in this disclosure, in Figure 3, the volatilization chamber is illustrated housed within a heating jacket 36. To provide heat to the volatilization chamber 7, saturated steam of a specific pressure and temperature, a heated gas of a specific temperature or a heated thermal fluid of a specific temperature is pumped or otherwise introduced to the heating jacket through an entry passage 37. The steam and/or condensed steam, heated gas or thermal fluid circulates out of the heating jacket through an exit passage 38. In embodiments where steam is used as the heating medium, it is preferred, but not required, that the steam be supplied by the same steam generator that provides heat to the primary gas heater 2. Alternatively, an electrical heat source within the jacket space or an electrical heating wire wrapped directly around the volatilization chamber may also be used. Any of these methods may be used to heat any of the embodiments of the volatilization chamber discussed or otherwise referred to in this disclosure.

In some embodiments, it may be preferred to passively insulate the volatilization chamber with a thermal insulation barrier such as fiberglass, ceramic wool, silica insulation, calcium silicate, aerogel, ceramic insulation, rock wool, mineral wool or any other suitable insulating medium. It may also be preferred in some applications to house the volatilization chamber within a vacuum jacket. As a non-limiting example, such a vacuum jacket may look substantially similar to the heating jacket 36 illustrated in Figure 3, except there would be no entry 37 or exit passages 38 for a heating medium. Instead, of heating medium entry and exit passages, an evacuation passage would be included that may include a check valve or similar vacuum containment method. Alternatively, the vacuum jacket may be permanently sealed or welded closed to retain the vacuum. Any of these methods may be used to insulate any of the embodiments of the volatilization chambers discussed or otherwise referred to in this disclosure.

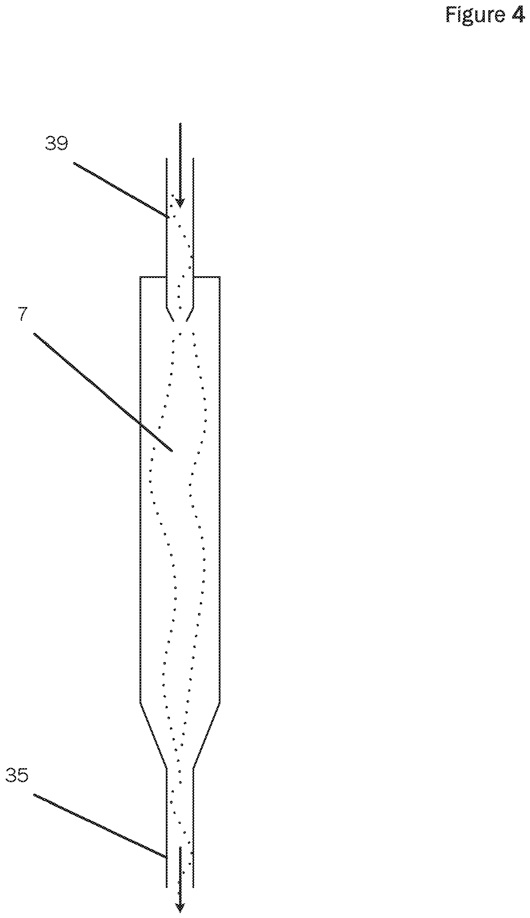

Figure 4 illustrates an additional embodiment of the volatilization chamber section 7 of the system that utilizes a modified spray drying technique. Conventional industrial spray drying techniques typically involve spraying a mostly liquid feed that contains some solids into a heated gas stream as it enters a drying chamber. Those of skill in the art will be familiar with the design of such spray drying chambers. Within a conventional spray drying chamber, the liquids are evaporated and subsequently vented as waste, while the solids are collected as the final product. (An example of a conventional spray drying application where the liquid is vented and the solids are collected as the final product is the production of powdered milk.) In the current embodiment, the opposite final product is desired. Instead of the solids being desired, the liquid portion is desired as a final product. Therefore, the utilization of the spray drying technique is modified in this invention to handle a mostly dry feed instead of a mostly liquid feed. In the current invention, powdered or finely-ground plant material (a solid that contains liquid oils) is introduced into a heated gas stream that enters a drying chamber / volatilization chamber. This heated gas stream is the primary gas stream as defined in this invention. The primary gas stream carries the entrained plant material into the volatilization chamber 7 through a downward facing entry tube 39 with a nozzle tip. The primary gas stream and plant material rapidly exiting the nozzle facilitates a turbulent flow of the heated gas stream within the volatilization chamber and agitates the plant material to cause rapid volatilization of the oils contained within the plant material. The primary gas stream and entrained plant material exit the volatilization chamber through an exit passage 35 in the bottom of the chamber 7. One or more chambers of this type may be used in series or in parallel or in combination with any other types of volatilization chambers. Utilization of different nozzle designs, the addition of pressurized and/or hot air at the nozzle site, modifications to the dimensions and diameter of the spray drying chamber and other changes may benefit volatilization of the plant material and/or prevent plant material from sticking to the walls of the chamber in similar ways that such modifications benefit conventional spray drying techniques. In some embodiments, it may be advantageous to introduce the plant material directly at the nozzle site versus upstream of the nozzle in the entrainment area 6. Those of skill in the art will understand that many commercial spray drying techniques and designs may be adapted for use in the present invention. Such adaptations will still fall within the scope of the present invention. As with other embodiments of the volatilization chamber, in order to maintain the temperature of the gas stream and to prevent condensation of the volatilized oils on the surfaces within the volatilization chamber, it is preferred that the volatilization chamber be provided with its own heat source and/or a thermal insulation barrier. Examples of such heat sources and thermal barriers were discussed above, and may be applied to all embodiments of the vaporization chamber.

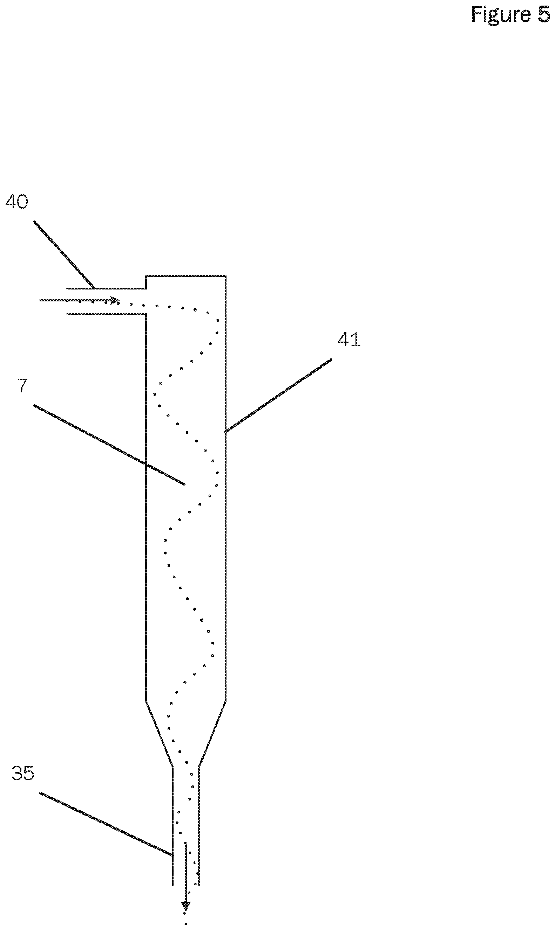

Figure 5 illustrates a third embodiment of the volatilization chamber 7 that is designed to centrifugally force the plant material into contact with the heated walls of the volatilization chamber to induce rapid volatilization of the plant oils. One or more chambers of this type may be used in series or in parallel or in combination with other types of volatilization chambers. In the embodiment illustrated in Figure 5, the primary gas stream 1 and the entrained plant material enter the volatilization chamber through a tangential entrance 40 at the upper end of the volatilization chamber 7. As the primary gas stream tangentially enters the volatilization chamber 7, the entrained plant materials are centrifugally forced into contact with the outer walls 41 of the chamber, where they spiral around the walls 41 of the volatilization chamber multiple times before eventually reaching the bottom exit 35 of the volatilization chamber. In order for successful volatilization of the plant oils to occur using this method, it is highly preferred that the walls 41 of the volatilization chamber be in contact with a heat source. However, in some applications the use of a thermal barrier may suffice. Examples of such heat sources and thermal barriers are discussed above, and may be applied to this embodiment and all other embodiments of the vaporization chamber.

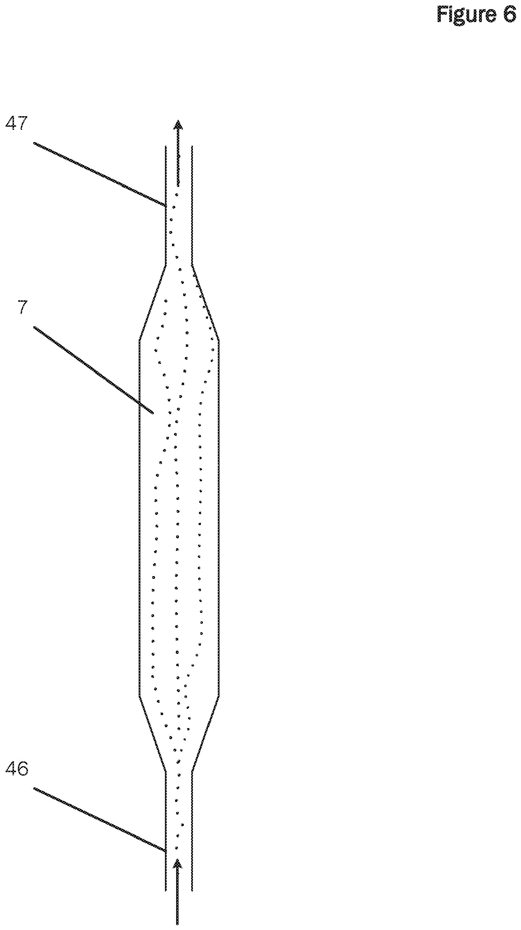

Figure 6 illustrates an embodiment of the volatilization chamber 7 that utilizes a modified form of pneumatic flash drying to induce rapid volatilization of oils within the plant material. One or more chambers of this type may be used in series or in parallel or in combination with other types of volatilization chambers. The primary gas stream containing entrained plant material enters the flash drying volatilization chamber 7 through a bottom entry passage 46 and carries the plant material upwards against gravity before exiting the chamber through an exit passage 47. The upper exit passage 47 may be relocated to the side of the chamber, however, it is preferred that the lower entry passage 46 remain at the lowermost point of the chamber 7. The diameter of the flash drying chamber and the flow rate of the primary gas stream must be carefully designed such that the heated gas flowing through the chamber is moving slightly faster than the natural freefall velocity of the plant material particles being processed. At this gas stream velocity, contact of the heated gas stream and plant particles is maximized, causing rapid volatilization of the plant oils. The length of the flash drying volatilization chamber 7 may be adjusted to maximize volatilization, or may be repeated with several shorter chambers arranged in series. As with other embodiments of the volatilization chamber, in order to maintain the temperature of the gas stream and to prevent condensation of the volatilized oils on the surfaces within the volatilization chamber, it is preferred that the volatilization chamber be provided with its own heat source and/or a thermal insulation barrier. Examples of such heat sources and thermal barriers are discussed above, and may be applied to all embodiments of the vaporization chamber.

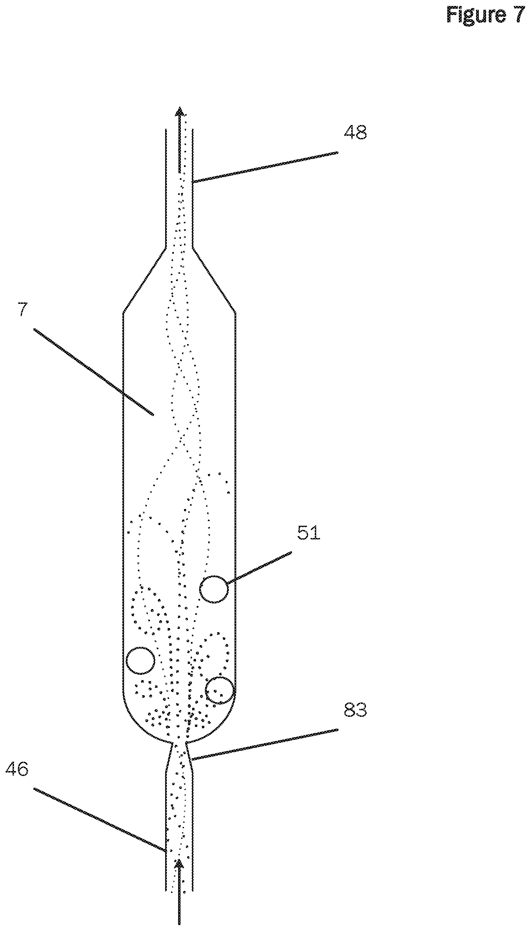

Figure 7 illustrates an additional embodiment of the volatilization chamber that is designed to prevent plant material that is still heavy laden with oils or has clumped into lumps from escaping the volatilization chamber until it has been broken up into small particles and has been fully stripped of its desirable oils. This special type of volatilization chamber is an adaptation of a flash drying chamber that is designed such that the diameter of the chamber and the gas stream flow volume create a gas velocity that only allows the smallest and most thoroughly oil-stripped particles of plant material, which are light enough to float upward in the gas stream, to exit the top of the chamber. Larger lumps or oil laden plant particles, which are too heavy to be carried up and out of the chamber, remain tumbling in an agitation zone until they are broken up and evaporated of their oils. It is only after the lumps of plant material are broken up and evaporated of their desirable oils that the plant materials become light enough and small enough to exit the chamber. As illustrated in Figure 7, the gas stream carrying entrained plant material enters the volatilization chamber through a bottom passage 46. The diameter of the bottom passage is reduced to a small diameter before entering the chamber to form an air blade nozzle 47. The high velocity air from the nozzle 47 turbulently enters the volatilization chamber and helps forcefully break apart any lumps or chunks of plant material that are too heavy to travel upward in the chamber. The lighter and smaller particles of plant material are quickly stripped of their desired oils and continue to travel upward with the gas stream to exit the chamber through an exit passage 48. The heavier chunks of plant material cannot attain lift in the lower velocity gas stream areas of the chamber and remain near the bottom of the chamber where they continue to tumble and impact one another and the walls of the chamber while simultaneously getting dryer as the oils that they contain volatilize in the heated chamber at a slower rate. Together, this effect of tumbling and drying causes the plant material lumps to break apart into progressively finer and finer particles. Once the particles are fine and light enough, they can attain the lift that they need to be carried by the rising gas stream to exit the top of the chamber through the exit passage 48. Other embodiments of this unique volatilization chamber design may include hollow or solid balls or beads or other objects of other shapes constructed of stainless steel, other metals, ceramics, thermal plastics, or any other suitable material to aid in breaking up the plant material. A non-limiting example of such an element is represented by a ball 51 in Figure 7. In such embodiments, the balls or other milling objects will be thrown around within the chamber by the air nozzle 83 to facilitate breaking up of the plant material. An excluder screen or other exclusion method may optionally be included to prevent a stray ball or milling object from escaping the volatilization chamber. Alternatively, the fast moving gas stream entering the chamber may be used to power a turbine blade (not shown) to a high velocity. The optional high velocity turbine blade may be used to break up any large particles of plant material moving around the bottom sections of the chamber. Such a blade could also be rotated by an externally powered shaft that passes through a wall of the chamber or incoming gas passage, or by a magnetic coupling to avoid the need for a shaft seal and/or shaft penetration hole that could potentially leak. The blade and milling object designs used in this embodiment of the vaporization chamber could be adapted for use in any of the vaporization chamber embodiments discussed in this disclosure. While the volatilization chamber illustrated in Figure 7 is illustrated as having a concave bottom area, in other embodiments it may be desirable to utilize a conical bottom area to continuously funnel the falling heavier plant materials back into the air pick or blade area. As with other embodiments of the volatilization chamber, in order to maintain the temperature of the gas stream and to prevent condensation of the volatilized oils on the surfaces within the volatilization chamber, it is preferred that the volatilization chamber be provided with its own heat source and/or a thermal insulation barrier. Examples of such heat sources and thermal barriers are discussed above, and may be applied to all embodiments of the vaporization chamber.

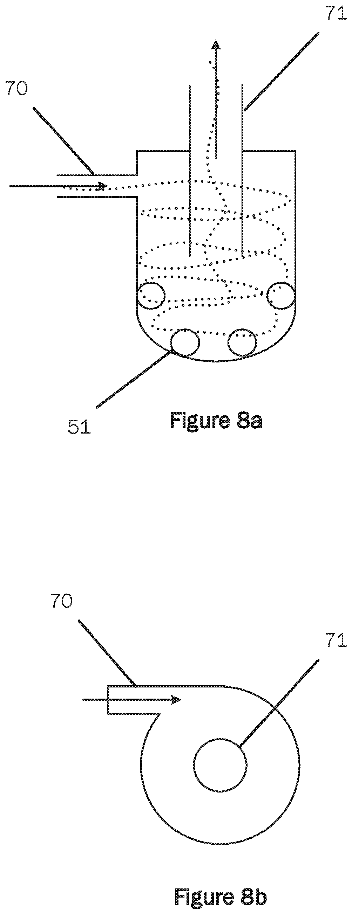

Figures 8a and 8b illustrate a cross-sectional and a top view of another embodiment of the volatilization chamber that is designed to prevent plant material that is still heavy laden with oils or has clumped into lumps from escaping the volatilization chamber until it has been broken up into small particles and been fully stripped of its desirable oils. In this embodiment, the gas stream and entrained plant material enters the volatilization chamber through a tangential side entrance 70. The gas stream enters at a high velocity and causes the entrained plant materials to spiral rapidly within the volatilization chamber. Optionally, hollow or solid balls or beads or other milling objects of other shapes constructed of stainless steel, other metals, ceramics, thermal plastics, or any other suitable material may be included in the volatilization chamber to aid in breaking up the plant material. These milling objects are preferably sized such that they cannot exit the chamber and continue to rapidly spiral along the walls of the chamber, grinding and breaking up any large plant material particles. Optionally, an excluder screen or other exclusion device may be used to prevent any chance of the milling objects from exiting the chamber. A non-limiting example of a few hollow milling balls 51 are illustrated in Figure 8a. The exit of the volatilization chamber is designed and positioned such to serve as a particle classifier that allows only the smallest and lightest particles of plant material to leave the chamber. In this way, only the plant materials that have been thoroughly broken up and have been substantially stripped of their desired oils can exit the chamber, where the heavier plant materials that still contain oils will continue to circulate within the volatilization chamber until they are light enough to leave. The embodiment of the volatilization chamber illustrated in Figures 8a and 8b functions in a similar way to a cyclone separator in that it centrifugally excludes larger particles from leaving through the primary chamber exit 71. However, it is very different from a typical cyclone separator in that it does not have a secondary exit for captured particles to escape and that eventually all of the plant material particles do escape through the primary exit. Instead of permanently separating the plant particles from the gas stream like a conventional cyclone, the plant material particles continue to circulate within the volatilization chamber until they are stripped of enough of their oils and are ground to a fine dust. When the plant material particles have attained a low enough mass to no longer be affected by centrifugal separation, they are carried out the main exit by the gas stream and eventually are separated by the primary plant material separator. By delaying the departure of the plant materials from the volatilization chamber in such a way, nearly complete extraction of the plant oils may be attained. The embodiment of the volatilization chamber illustrated in Figures 8a and 8b may be used in parallel or in series with additional similar volatilization chambers or in combination with any of the other volatilization chambers described in this disclosure. In particular, it may be beneficial to use this embodiment of the volatilization chamber before a flash drying chamber such as the embodiment illustrated in Figure 6.

While not illustrated in any figures in this disclosure, another embodiment of the volatilization chamber that may be preferred with some types of plant materials would consist of a pneumatic ring dryer design. The term pneumatic ring dryer is well defined in industrial drying literature and the design of a ring dryer will be well known to those of skill in the art. A ring dryer version of the volatilization chamber will have the benefit of allowing plant material to graduate through the system only after the desirable oils have been volatilized. Other methods that may attain excellent volatilization of the plant oils may include spin flash drying systems, spin flash drying systems with agitator blades, rotating drum dryers, ball mill dryers, dryers with particle classifiers and other methods that will be known to those of skill in the art.

Figure 9 illustrates a detailed view of an embodiment of the primary plant material separation device 8 and the secondary plant material entrainment section 27. As illustrated in Figure 9, the primary separation device is a cyclone separator. However, other centrifugal or non-centrifugal separation methods may be used. The primary gas stream and entrained plant materials enter the primary plant material separation device through a tangential entrance 42 at the side of the separator 8. Upon entering the primary plant material separator, the entrained plant materials are centrifugally forced into contact with the outer walls 43 of the separator 8, where they spiral down the walls 43 of the separator and fall from the bottom exit of the separator and eventually reach the processed plant material collection bin 29. The primary gas flow exits through the top portion 53 of the separator substantially free of entrained plant material and continues to the optional gas stream filter 49 or directly to the cooling spray section 9 of the system. While many centrifugal separators are oriented in the position described in Figure 7, it will be known to those of skill in the art that the orientation of the separator may be altered and that a repositioning of the top and/or bottom exits and/or side entry points (if applicable) will still fall under the scope of the present invention.

It should be noted that one or more primary plant material separation devices may be used in parallel or in series or both in parallel and in series to obtain more complete separation of the entrained plant materials from the primary gas stream. In the case that a cyclone separator is used as the primary plant material separation device, better separation can be achieved by the utilization of several small cyclones in parallel, each of a smaller diameter with a lower volume of gas flow, versus using one cyclone of a large diameter with a higher volume of gas flow. Placing cyclones in series also achieves better separation. In the interest of maintaining simplicity in the design of the invention, it is preferable to use the least amount of cyclones required to achieve the desired level of separation. This applies not only to the primary separation cyclone, but also to any other plant material or droplet separation cyclones used within the system.

As illustrated in the embodiment of the primary plant material separator 8 that is depicted in Figure 9, as the separated plant material falls from the bottom exit of the separator 8, it optionally passes through a specialized, heated and/or insulated exit tube 44. This heated exit tube 44 is also illustrated in the flow diagrams in Figure 1. Upon reaching the bottom of the heated exit tube 44, the processed plant material falls into the secondary entrainment section 27 where it is entrained in the secondary gas stream 25 and propelled into the secondary plant material separator 28 to eventually fall into the processed plant material collection bin 29. It is preferable that the secondary gas stream 25 be maintained at a lower temperature than the primary gas stream 1, such that the processed plant material is cooled upon coming in contact with the secondary gas stream 25. By cooling the processed plant material, further volatilization is arrested and heat degradation of the plant material is prevented. This is especially important in the case that the operator of the system desires to perform a second, higher temperature extraction of the plant material to extract plant oils of a higher boiling point than those that were extracted in the first extraction cycle. Failure to cool the processed plant material could damage the remaining oils and could also lead to degraded oil vapors traveling upwards from the collection bin and into the primary gas stream as the system operates, thereby reducing the quality of the extract. As an alternative, a simple method of allowing the processed plant material to drop as a result of gravity or be mechanically propelled from the bottom of the primary plant material separator 8 into a bin or disposal area may be used to avoid the need for a secondary gas stream 25 and the parts required for a secondary gas stream system. If such an alternative is used, it may be preferable in some applications to provide an airlock valve, flapper valve or other method of isolating the primary plant material separator from the outside atmosphere.

As processed plant material travels down the heated exit tube 44, a portioned, small volume of atmospheric gas or displacing gas is simultaneously entering the system through the in-only check valve 30 connected to the processed plant material collection bin 29 and subsequently mixing with the gases in the secondary gas stream 25. This gradual inward flow of the atmospheric or displacing gas slowly flows up into the system through the same heated tube 44 that the processed plant material is falling down, against the downward flow of falling plant material. This flow of atmospheric gas or displacing gas (illustrated by the small, upward traveling arrows 45 in the heated exit tube 44) serves an important purpose - it prevents plant oil vapors from escaping from the exit of the primary plant material separator 8 and condensing on the parts within the secondary gas flow loop 25 and processed plant material bin 29. To prevent any condensation from occurring within the lower exit portion of the primary plant material separator 8, the heated exit tube 44 should be of sufficient length such that the vapor-free atmospheric or displacing gas is heated to near or greater than the volatilization temperature of the plant oils being volatilized prior to reaching the bottom portion of the primary plant material separator 8. The heat source for the heated exit tube 44 may be the heating jacket 36 described in the following paragraph, or a separate heating jacket that is heated by a similar method to the heating jacket 36 described in the following paragraph. Alternatively, the heated exit tube 44 may be directly wrapped in an electric heating cable or similar device. The displacing gas may also be heated by other methods. One non-limiting example would be to place a spiraled atmospheric gas or displacing gas tube constructed of a metal, silicone or other heat resistant material in a heated area of the system or within the heated chamber that houses some or all of the heated components in some embodiments, such that the displacing gas is heated prior to being introduced to the separated plant material exit tube 44. Another non-limiting example would be to wrap a displacing gas or atmospheric displacing gas tube of suitable material in heating coils. Other methods may also be used to heat the gas being introduced to the separated plant material exit 44. In cases where the method of displacing volatilized plant oils from the separated plant materials exit 44 are not effective or not deemed to be the best option, mechanical methods of removing accumulated plant oils from the plant material exit 44 and pathways to the separated plant material bin 29 may be employed. A few non-limiting examples include utilization of an auger screw or auger conveyor, rotating scraper blades, plunger pistons, a belt system or other methods that will be known to those of skill in the art.

It should be noted that supplying the walls 43 of the primary plant material separator 8 with a sufficient heat source may be desirable and may have the added benefit of providing an option to omit the preceding volatilization chamber section 7 of the system in some circumstances. If sufficient heat can be transferred to the plant material through direct contact with the heated walls 43 of the primary plant material separator 8, sufficient volatilization and extraction will occur without the need for a separate volatilization chamber 7. As illustrated in Figure 9, both the processed plant material exit tube 44 and the primary plant material separator 8 are housed within a heating jacket 36. To provide heat to the plant material separator 8 and plant material exit tube 44, saturated steam of a specific pressure and temperature, a heated gas of a specific temperature or a heated thermal fluid of a specific temperature is pumped or otherwise introduced to the heating jacket through an entry passage 37. The steam and/or condensed steam, heated gas or thermal fluid circulates out of the heating jacket through an exit passage 38. In embodiments where steam is used as the heating medium, it is preferred, but not required, that the steam be supplied by the same steam generator that provides heat to the primary gas heater. Alternatively, an electrical heat source within the jacket space or an electrical heating wire wrapped directly around the plant material separator 8 and/or exit tube may also be used.

As with the previously described volatilization chamber embodiments, in some embodiments of the primary plant material separator, it may be preferred to passively insulate the primary plant material separator 8 with a thermal insulation barrier such as fiberglass, ceramic wool, silica insulation, calcium silicate, aerogel, ceramic insulation, rock wool, mineral wool or any other suitable insulating medium. It may also be preferred in some applications to house the primary plant material separator 8 within a vacuum jacket. By way of example only, such a vacuum jacket would look substantially similar to the heating jacket 36 illustrated in Figure 9, except there would be no entry 37 or exit passages 38 for a heating medium. Instead, an evacuation passage would be included that may include a check valve or similar vacuum containment method. Alternatively, the vacuum jacket may be permanently sealed or welded closed to retain the vacuum. The primary plant material separator and/or separated plant material exit tube 44 may also be housed within an insulated and/or heated chamber with all or some of the heated components of the system. Such a method has been described in detail in other sections of this disclosure.

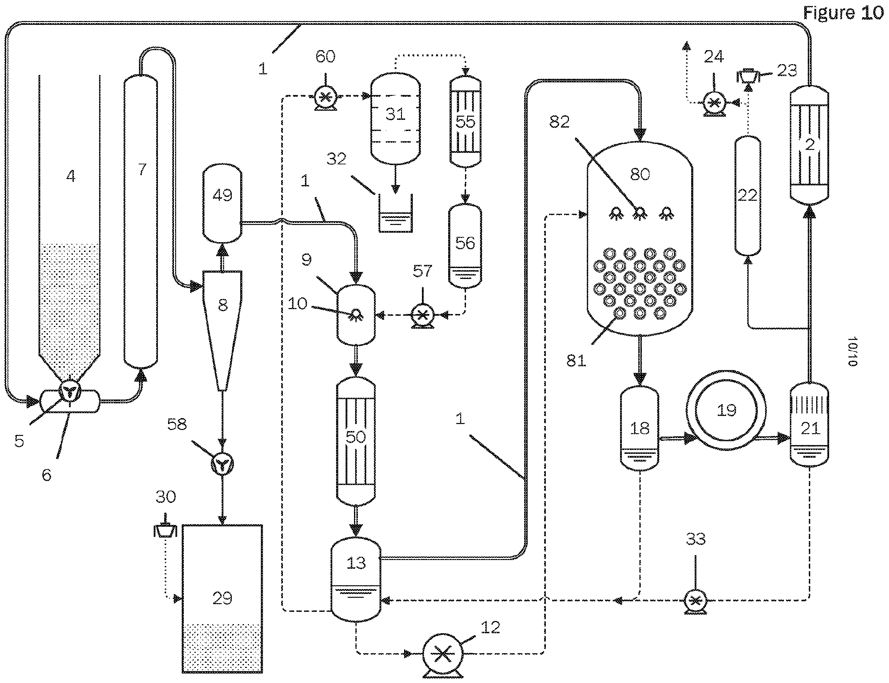

In some cases, more efficient collection of the volatilized plant oils may occur through the utilization of a wetted packing material 81. Non-limiting examples of embodiments that utilize wetted packing materials are discussed in PCT/IB2014/002383, One example of a collection chamber containing wetted packing is illustrated in Figure 10. Such an embodiment utilizing wetted packing may include a collection chamber 80 containing a wetted substrate 81 such as, but not limited to, random packing including raschig rings, saddles and beads made of glass, ceramics metals or other materials, other random packing materials such as sand, alumina, gravel, PTFE fibers, stainless steel wool, fiberglass or mineral wool fibers, and structured packing such as knitted packing, woven wire mesh, stainless steel wool, stainless steel matting, woven stainless steel mesh, corrugated metal sections, bubble-cap plates and sieve tray plates or other types of packing to capture the volatilized plant oils. The packing material 81 may be wetted with collection solvent, which may collect the plant oils and eventually drip down through the packing material to the sump area 13 to be recovered. In Figure 10, the packing material may be wetted by collection solvent sprayers 82 or by other methods of contacting the packing material with collection solvent. As with other embodiments, it should be known that the wetted packing collection chamber 80 illustrated in Figure 10 may also serve as the system's cooling chamber, with the sprayers 82 and/or packing material 81 serving to cool the gas stream. Alternatively, a separate cooling chamber may be provided upstream of the collection chamber 80, as is already illustrated in Figure 10. A collection chamber with a wetted packing material may be used in other embodiments and in combination with collection chambers with collection solvent sprayers 17 or any other collection methods. The location of the collection chamber 80 may also be varied depending on the application. As one non-limiting example, the wetted packing collection chamber 80 may be relocated to the position of the gas stream cooler 50.

Finally, it should be known that in addition to the oil droplet collection methods previously discussed, an electrostatic method of capturing condensed oil droplets may also be employed in the present invention. In such embodiments, an electrostatic scrubber, the design of which will be readily known to those who are skilled in the art, may be placed after the cooling section 9 of the system. With this placement, the electrostatic collection plates may be optionally washed of collected oils by the falling collection solvent. The electrostatic collection plates may also be placed after the agglomeration section 14 or after the collection chamber section 16 and may be optionally washed with a spray of collection solvent. If efficient electrostatic collection occurs, it may be possible to reduce or eliminate some of the other collection methods throughout the system.

By way of non-limiting example only, the following operating conditions and delivery rates may be utilized to extract plant oil: A centrifugal-type gas stream mover 19 capable of providing an outlet pressure of approximately 0.0689 to 0,3445 bar (1.0 to 5.0 pounds per square inch) is utilized to move the gas stream 1 throughout the system. Other examples may include a gas stream mover capable of providing an outlet pressure of 0 to 10,335 bar (1.0 to 150 pounds per square inch). The gas stream mover 19 moves the gas stream 1 throughout the system at a flow rate of approximately 849 to 2832 litres (30 to 100 standard cubic feet) per minute. Other examples may include a gas stream mover capable of providing a flow rate of approximately 2.8 to 849 litres (0.1 to 30 standard cubic feet) per minute, 2832 to 5664 litres (100 to 200 standard cubic feet) per minute, 5664 to 14160 litres (200 to 500 standard cubic feet) per minute, over 14160 litres (500 standard cubic feet) per minute or other ranges. As the gas stream passes through the gas stream heater 2, the gas stream is heated to a temperature of approximately 143 degrees Celsius to 221 degrees Celsius (290 degrees Fahrenheit to 430 degrees Fahrenheit). In other examples, the gas stream may be heated to a temperature (the temperature in degrees Celsius is obtained by subtraction of 32 from the temperature in Fahrenheit where after the result is multiplied by 5/9) range of approximately 100 to 300 degrees Fahrenheit, 100 to 310 degrees Fahrenheit, 200 to 300 degrees Fahrenheit, 200 to 310 degrees Fahrenheit, 280 to 450 degrees Fahrenheit, 300 to 500 degrees Fahrenheit, 300 to 400 degrees Fahrenheit, 300 to 370 degrees Fahrenheit, 300 to 365 degrees Fahrenheit, 305 to 360 degrees Fahrenheit, 300 to 360 degrees Fahrenheit, 300 to 330 degrees Fahrenheit, 310 to 320 degrees Fahrenheit, 340 to 370 degrees Fahrenheit, 350 to 360 degrees Fahrenheit, 350 to 365 degrees Fahrenheit, 415 to 445 degrees Fahrenheit, any combination of these temperature ranges or other temperature ranges. Powdered or finely-ground plant material containing plant oils is fed into the gas stream 1 via an entrainment zone 6 at a rate of approximately 0.03 to 0.25 pounds per minute. (1 pound = 0,4536 kg). Other examples may include a feed rate of 0.001 to 0.03 pounds per minute, 0.25 to 1.0 pounds per minute, 1.0 to 5.0 pounds per minute, 5.0 to 10.0 pounds per minute, more than 10.0 pounds per minute or other feed rates. To the greatest degree possible, the internal surface temperature of the extraction chamber 7 area and all areas of the system that contact the gas stream as the gas stream passes between the gas stream heater 2 and the gas stream cooling section 9 are kept above the condensation temperature of the volatilized oils or near the temperature of the gas stream exiting the heater 2 to prevent condensation of plant oils on these surfaces. In some examples, this temperature is kept near or above approximately 290 to 430 degrees Fahrenheit. In other examples, the temperature may be kept in a range of approximately 100 to 300 degrees Fahrenheit, 100 to 310 degrees Fahrenheit, 200 to 300 degrees Fahrenheit, 200 to 310 degrees Fahrenheit, 280 to 450 degrees Fahrenheit, 300 to 500 degrees Fahrenheit, 300 to 400 degrees Fahrenheit, 300 to 370 degrees Fahrenheit, 300 to 365 degrees Fahrenheit, 305 to 360 degrees Fahrenheit, 300 to 360 degrees Fahrenheit, 300 to 330 degrees Fahrenheit, 310 to 320 degrees Fahrenheit, 340 to 370 degrees Fahrenheit, 350 to 360 degrees Fahrenheit, 350 to 365 degrees Fahrenheit, 415 to 445 degrees Fahrenheit, any combination of these temperature ranges or other temperature ranges. The evaporation device 31 is operable to distill approximately 0.04 to 0.15 gallons (1 US gallon = 3,7854 litres) per minute of collection solvent from the mixture of plant oils and collection solvent. Other examples may include separation rates of approximately 0.0002 to 0.04 gallons per minute, 0.15 to 0.5 gallons per minute, 0.5 to 1.0 gallons per minute, 1.0 to 5.0 gallons per minute, 5.0 to 10.0 gallons per minute, more than 10.0 gallons per minute or other rates. The distilled collection solvent is stored in a separate reservoir 56 from the sump reservoir area 13. A substantially purified flow of collection solvent is pumped to the cooling spray 10 at a rate of approximately 0.03 to 1.0 gallons per minute. Other examples may include rates of 0.0002 to 0.03 gallons per minute, 1.0 to 7.0 gallons per minute, 7.0 to 10.0 gallons per minute, greater than 10.0 gallons per minute, less than 10.0 gallons per minute or other rates. The cooling spray cools the gas stream to approximately 160 to 180 degrees Fahrenheit. In other examples, the cooling spray cools the gas stream to approximately 80 to 150 degrees Fahrenheit, 0 to 150 degrees Fahrenheit, 0 to 100 degrees Fahrenheit, 40 to 80 degrees Fahrenheit, less than 180 degrees Fahrenheit, less than 173 degrees Fahrenheit, less than 150 degrees Fahrenheit, less than 140 degrees Fahrenheit, less than 130 degrees Fahrenheit, less than 120 degrees Fahrenheit, less than 110 degrees Fahrenheit, less than 100 degrees Fahrenheit or other temperatures. After contacting the cooling spray, the gas stream and entrained liquids pass through the primary gas stream cooler 50. The gas stream cooler 50 cools the gas stream and entrained liquids/oils to approximately 90 to 150 degrees Fahrenheit. In other examples, the gas stream cooler cools the gas stream and entrained liquids/oils to approximately 0 to 150 degrees Fahrenheit, 0 to 100 degrees Fahrenheit, 40 to 80 degrees, 0 to 90 degrees Fahrenheit, less than 150 degrees Fahrenheit, less than 140 degrees Fahrenheit, less than 130 degrees Fahrenheit, less than 120 degrees Fahrenheit, less than 110 degrees Fahrenheit, less than 100 degrees Fahrenheit, less than 90 degrees Fahrenheit, less than 80 degrees Fahrenheit, or other temperatures. In embodiments using only a spray cooler or a spray collection chamber to cool the gas stream, these sections may be operable to cool the gas stream and entrained liquids/oils to approximately 90 to 150 degrees Fahrenheit or any of the temperature ranges listed above for the cooling spray or gas stream cooler. In embodiments in which the collection solvent is cooled by a cooler, such as 55, before being sprayed in the spray cooler, the collection solvent may be cooled to a temperature less than the boiling point of the collection solvent being used. In other examples, the collection solvent cooler, such as 55, may cool the collection solvent to a temperature of approximately 0 to 150 degrees Fahrenheit, 0 to 40 degrees Fahrenheit, 40 to 80 degrees Fahrenheit, 80 to 120 degrees Fahrenheit, to less than 100 Fahrenheit, to less than 120 degrees Fahrenheit, to less than 150 degrees Fahrenheit or other temperature ranges. To the greatest degree possible, all of the internal areas of the system that contact the gas stream as the gas stream passes between the gas stream cooler 50 and the gas stream heater 2 are kept at a temperature that is below the temperature of the gas stream when it exits the gas stream cooler 50, such that collection solvent condenses on these surfaces to wash away any accumulated plant oils. In some examples, the temperature is kept near or below 85 to 145 degrees Fahrenheit. The primary solvent pump 12 pumps collection solvent from the sump area 13 to the collection solvent sprayers 17 in the collection chamber 16 at a rate of approximately 1.0 to 7.0 gallons per minute. Other examples include a rate of 0.0002 to 1.0 gallons per minute, 7.0 to 10.0 gallons per minute, greater than 10.0 gallons per minute, less than 10.0 gallons per minute or other rates. The collection solvent used within the system may be comprised primarily of ethyl alcohol and water at a ratio of approximately 40% ethyl alcohol and 60% water to 95% ethyl alcohol and 5% water. The evacuation pump 24 is operable to maintain a negative system pressure such that the highest pressure area of the gas stream (such as that found at the blower exit) is still kept slightly below that of ambient pressure. In doing such, solvent vapors and/or volatilized plant oils do not readily escape from the seals within the system and must pass through the cold trap 22 where they are condensed and returned to the system. The volume of gas displaced by the evacuation pump 24 is approximately 0.01 to 5.0 cubic feet per minute.

The specific descriptions in this disclosure should not be viewed as limiting the scope of this invention. As a non-limiting example, different heat exchangers may be used, components may be moved around, functions of various components may be combined into one structure or the function of one component may be divided between several components. Further, the arrangements and configurations of elements in Figure 1 and Figure 2 are for ease of explanation and are not limiting. As one example, the volatilization chamber 7 is shown with a bottom entrance and a top exit but may have the entrance and exit located elsewhere. Those of skill in the art will recognize that the herein described embodiments of the present invention may be altered in other ways without departing from the scope or teaching of the present invention. As another non-limiting example of one of many ways that the system may be rearranged, in comparison to Figure 1, the embodiment illustrated in Figure 2 shows several of the parts of the system rearranged or even eliminated. Figure 2 shows that the centrifugal droplet separator 20 illustrated in Figure 1 has been removed. In this embodiment, only a single demisting section 21 is utilized to prevent droplets from entering the heater 2. The steam generator 3 has also been removed in Figure 2. In this embodiment, electric heating elements are used in the heater section 2. The plant material collection system has also been simplified. Instead of utilizing a secondary entrainment zone 27 and a secondary gas stream 25, the primary plant material separation device drains directly into the processed plant material collection bin 29. An optional airlock valve 58 may be used to keep the processed plant material collection bin 29 separated from the primary gas stream 1. Two gas movers 19 have been used in series to increase the pressure available to propel the gas stream. The placement of one of the gas movers 19 has been moved from the position illustrated in Figure 1, however, this could be placed directly in front of the second gas mover 19 or elsewhere in the system. The invention is limited as by the appended claims.

## Claims

1. A method for extracting an oil from plant material, the method comprising:
providing a system for extracting an oil from plant material, the system comprising:
a gas moving device (19) operable to propel a gas stream through the system, the gas stream being a stream of air or gas with or without entrained vapor, solids or droplets of liquid therein;
an extraction chamber (7) in communication with the gas moving device (19) such that the gas stream is directed through the extraction chamber (7), the extraction chamber (7) operable to volatize at least a portion of an oil from the plant material such that the volatilized oil is disposed in the gas stream as an extracted oil;
a plant material separation device (8) in communication with and downstream of the extraction chamber (7), the plant material separation device (8) operable to separate at least a portion of the plant material entrained in the gas stream therefrom;
a collection chamber (16) in communication with the extraction chamber (7) such that the gas stream flows through the collection chamber (16), the collection chamber (16) having collection solvent operable to collect at least a portion of the extracted oil from the gas stream; and
a liquid collector in fluid communication with the collection chamber (16) for collecting at least a portion of the collection solvent and extracted oil;
providing the plant material in the extraction chamber;
entraining the plant material in the gas stream;
volatilizing oil from the plant material, the oil being extracted into the gas stream;
separating at least a portion of the plant material entrained in the gas stream therefrom;
contacting the gas stream with the collection solvent such that at least some of the oil is captured by the collection solvent; and
collecting a portion of the oil and collection solvent from the gas stream.

2. The method of claim 1, wherein
the volatilizing step comprises exposing the plant material to the gas stream, the gas stream being heated to a temperature sufficient to cause volatilization of the oil to be extracted from the plant material.

3. The method of claim 1 or 2, wherein the contacting and collecting steps comprise flowing at least a portion of the gas stream through the collection chamber and spraying the at least portion of the gas stream with the collection solvent such that at least some of the oil in the gas stream is captured by the collection solvent and at least some of the collection solvent flows to the collection chamber.

4. The method in accordance with any of the preceding claims, wherein the plant material is selected from the group consisting of one or more types of cannabis.

5. The method in accordance with any of the preceding claims, wherein the extracted oil contains one or more of: cannabidiol ("CBD"); cannabidivarin ("CBDV"); delta-9-tetrahydrocannabinol ("THC"); delta-8-tetrahydrocannabinol; tetrahydrocannabivarin ("THCV"); cannabinol ("CBN"); cannabigerol; cannabichromene; chemically converted cannabinoids; or other cannabinoids.

## Patentansprüche

1. Verfahren zum Extrahieren eines Öls aus Pflanzenmaterial, wobei das Verfahren Folgendes umfasst:
Bereitstellen eines Systems zum Extrahieren eines Öls aus Pflanzenmaterial, wobei das System Folgendes umfasst:
eine Gastransportvorrichtung (19), die so betrieben werden kann, dass sie einen Gasstrom durch das System treibt, wobei der Gasstrom ein Strom von Luft oder Gas mit oder ohne mitgerissenem Dampf, Feststoffen oder Flüssigkeitstropfen darin ist;
eine Extraktionskammer (7) in Kommunikation mit der Gastransportvorrichtung (19), so dass der Gasstrom durch die Extraktionskammer (7) geleitet wird, wobei die Extraktionskammer (7) so betrieben werden kann, dass sie mindestens einen Teil eines Öls aus dem Pflanzenmaterial verflüchtigt, so dass sich das verflüchtigte Öl in dem Gasstrom als ein extrahiertes Öl befindet;
eine Pflanzentrennvorrichtung (8) in Kommunikation mit und stromabwärts der Extraktionskammer (7), wobei die Pflanzenmaterialtrennvorrichtung (8) so betrieben werden kann, dass sie mindestens einen Teil des Pflanzenmaterials, das in dem Gasstrom mitgerissen wird, davon trennt;
eine Sammelkammer (16) in Kommunikation mit der Extraktionskammer (7), so dass der Gasstrom durch die Sammelkammer (16) strömt, wobei die Sammelkammer (16) ein Sammellösungsmittel aufweist und so betrieben werden kann, dass sie mindestens einen Teil des extrahierten Öls aus dem Gasstrom sammelt; und
einen Flüssigkeitssammler in Fluidkommunikation mit der Sammelkammer (16) zum Sammeln mindestens eines Teils des Sammellösungsmittels und extrahierten Öls;
Bereitstellen des Pflanzenmaterials in der Extraktionskammer;
Mitreißenlassen des Pflanzenmaterials in dem Gasstrom; Verflüchtigen von Öl aus dem Pflanzenmaterial, wobei das Öl in den Gasstrom extrahiert wird;
Trennen mindestens eines Teils des Pflanzenmaterials, das in dem Gasstrom mitgerissen wird, von diesem;
Inkontaktbringen des Gasstroms mit dem Sammellösungsmittel, so dass mindestens ein Teil des Öls durch das Sammellösungsmittel eingefangen wird; und
Sammeln eines Teils des Öls und Sammellösungsmittels aus dem Gasstrom.

2. Verfahren nach Anspruch 1, wobei
der Schritt des Verflüchtigens das Aussetzen des Pflanzenmaterials gegenüber dem Gasstrom umfasst, wobei der Gasstrom auf eine Temperatur erwärmt wird, die ausreicht, um die Verflüchtigung des Öls, das aus dem Pflanzenmaterial zu extrahieren ist, zu bewirken.

3. Verfahren nach Anspruch 1 oder 2, wobei die Schritte des Inkontaktbringens und des Sammelns das Strömenlassen mindestens eines Teils des Gasstroms durch die Sammelkammer und das Besprühen des mindestens einen Teils des Gasstroms mit dem Sammellösungsmittel, so dass mindestens ein Teil des Öls in dem Gasstrom durch das Sammellösungsmittel eingefangen wird und mindestens ein Teil des Sammellösungsmittels zur Sammelkammer strömt, umfasst.

4. Verfahren nach einem der vorstehenden Ansprüche, wobei das Pflanzenmaterial aus der Gruppe ausgewählt ist, die aus einem oder mehreren Typen von Cannabis besteht.

5. Verfahren nach einem der vorstehenden Ansprüche, wobei das extrahierte Öl eines oder mehrere der Folgenden enthält: Cannabidiol ("CBD"); Cannabidivarin ("CBDV"); Delta-9-Tetrahydrocannabinol ("THC"); Delta-8-Tetrahydrocannabinol; Tetrahydrocannabivarin ("THCV") ; Cannabinol ("CBN") ; Cannabigerol; Cannabichromen; chemisch umgewandelte Cannabinoide; oder andere Cannabinoide.

## Revendications

1. Procédé d'extraction d'une huile à partir de matière végétale, le procédé comprenant :
la fourniture d'un système pour extraire une huile à partir de matière végétale, le système comprenant :
un dispositif de déplacement de gaz (19) pouvant fonctionner pour propulser un flux gazeux à travers le système, le flux gazeux étant un flux d'air ou de gaz avec ou sans vapeur, solides ou gouttelettes de liquide entraînés à l'intérieur ;
une chambre d'extraction (7) en communication avec le dispositif de déplacement de gaz (19) de sorte que le flux gazeux est dirigé à travers la chambre d'extraction (7), la chambre d'extraction (7) pouvant fonctionner pour volatiliser au moins une partie d'une huile à partir de la matière végétale de sorte que l'huile volatilisée est disposée dans le flux gazeux comme une huile extraite ;
un dispositif de séparation de matière végétale (8) en communication avec la chambre d'extraction (7) et en aval de celle-ci, le dispositif de séparation de matière végétale (8) pouvant fonctionner pour séparer au moins une partie de la matière végétale entraînée dans le flux gazeux de celui-ci ;
une chambre de collecte (16) en communication avec la chambre d'extraction (7) de sorte que le flux gazeux circule à travers la chambre de collecte (16), la chambre de collecte (16) ayant un solvant de collecte pouvant fonctionner pour collecter au moins une partie de l'huile extraite à partir du flux gazeux ; et
un collecteur de liquide en communication fluidique avec la chambre de collecte (16) pour collecter au moins une partie du solvant de collecte et de l'huile extraite ;
la fourniture de la matière végétale dans la chambre d'extraction ;
l'entraînement de la matière végétale dans le flux gazeux ;
la volatilisation de l'huile à partir de la matière végétale, l'huile étant extraite dans le flux gazeux ;
la séparation d'au moins une partie de la matière végétale entraînée dans le flux gazeux de celui-ci ;
la mise en contact du flux gazeux avec le solvant de collecte de sorte qu'au moins une partie de l'huile est capturée par le solvant de collecte ; et
la collecte d'une partie de l'huile et du solvant de collecte à partir du flux gazeux.

2. Procédé selon la revendication 1,
dans lequel l'étape de volatilisation comprend l'exposition de la matière végétale au flux gazeux, le flux gazeux étant chauffé à une température suffisante pour provoquer la volatilisation de l'huile à extraire à partir de la matière végétale.

3. Procédé selon la revendication 1 ou 2, dans lequel les étapes de mise en contact et de collecte comprennent la circulation d'au moins une partie du flux gazeux à travers la chambre de collecte et la pulvérisation de l'au moins une partie du flux gazeux avec le solvant de collecte de sorte qu'au moins une partie de l'huile dans le flux gazeux est capturée par le solvant de collecte et qu'au moins une partie du solvant de collecte circule jusqu'à la chambre de collecte.

4. Procédé selon l'une quelconque des revendications précédentes, dans lequel la matière végétale est choisie dans le groupe constitué d'un ou de plusieurs types de cannabis.

5. Procédé selon l'une quelconque des revendications précédentes, dans lequel l'huile extraite contient un ou plusieurs parmi : le cannabidiol (« CBD ») ; la cannabidivarine (« CBDV ») ; le delta-9-tétrahydrocannabinol (« THC ») ; le delta-8-tétrahydrocannabinol ; la tétrahydrocannabivarine (« THCV ») ; le cannabinol (« CBN ») ; le cannabigérol ; le cannabichromène ; des cannabinoïdes chimiquement convertis ; ou d'autres cannabinoïdes.
